(19) Europäisches Patentamt
European Patent Office
Office européen des brevets

(11) EP 2 197 966 B1

(12) EUROPÄISCHE PATENTSCHRIFT

(45) Veröffentlichungstag und Bekanntmachung des Hinweises auf die Patenterteilung:
**09.03.2011 Patentblatt 2011/10**

(21) Anmeldenummer: **08837278.4**

(22) Anmeldetag: **06.10.2008**

(51) Int Cl.:
*C09D 133/06* (2006.01) *C09D 167/08* (2006.01)

(86) Internationale Anmeldenummer:
**PCT/EP2008/063362**

(87) Internationale Veröffentlichungsnummer:
**WO 2009/047237 (16.04.2009 Gazette 2009/16)**

(54) **WÄSSRIGE DISPERSIONEN AUFWEISEND MINDESTENS EIN ALKYD-HARZ UND MINDESTENS EIN POLYMERISAT MIT MINDESTENS EINEM (METH)ACRYLAT-SEGMENT**

AQUEOUS DISPERSIONS INCLUDING AT LEAST ONE ALKYD RESIN AND AT LEAST ONE ADDITION POLYMER HAVING AT LEAST ONE (METH)ACRYLATE SEGMENT

DISPERSIONS AQUEUSES PRÉSENTANT AU MOINS UNE RÉSINE ALKYDE ET AU MOINS UN POLYMÈRE COMPORTANT AU MOINS UN SEGMENT DE (MÉTH)ACRYLATE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.10.2007 DE 102007048189**

(43) Veröffentlichungstag der Anmeldung:
**23.06.2010 Patentblatt 2010/25**

(73) Patentinhaber: **Evonik Röhm GmbH**
**64293 Darmstadt (DE)**

(72) Erfinder:
- **BREINER, Christine**
  **69514 Laudenbach (DE)**
- **KNEBEL, Joachim**
  **64665 Alsbach-Hähnlein (DE)**
- **SCHMITT, Gerold**
  **63743 Aschaffenburg (DE)**

(56) Entgegenhaltungen:
**EP-A- 0 554 780**
**WO-A-2007/042684**
**DE-A- 3 339 212**
**US-A- 5 538 760**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 197 966 B1

**Beschreibung**

Die vorliegende Erfindung betrifft wässrige Dispersionen, die mindestens ein Alkyd-Harz und mindestens ein Polymerisat mit mindestens einem (Meth)acrylat-Segment aufweisen. Des Weiteren betrifft die vorliegende Erfindung Verfahren zur Herstellung dieser Dispersionen.

Beschichtungsmittel, insbesondere Lacke werden seit langer Zeit synthetisch hergestellt. Viele dieser Beschichtungsmittel basieren auf so genannten Alkyd-Harzen, die im Allgemeinen unter Verwendung von mehrwertigen Säuren, Alkoholen und Fettsäuren und/oder Fettsäurederivaten hergestellt werden. Eine besondere Gruppe dieser Alkyd-Harze bilden bei Sauerstoffeinwirkung vernetzte Filme, wobei die Vernetzung durch Oxidation mit Beteiligung von ungesättigten Gruppen erfolgt. Viele dieser Alkyd-Harze umfassen organische Lösungs- oder Dispersionsmittel, um die Harze in einer dünnen Schicht auf Beschichtungskörper auftragen zu können. Auf die Verwendung dieser Lösungsmittel sollte jedoch aus Gründen des Umweltschutzes sowie der Arbeitssicherheit verzichtet werden. Daher wurden entsprechende Harze auf Basis von wässrigen Dispersionen entwickelt, deren Lagerstabilität jedoch begrenzt ist. Des Weiteren sind die Eigenschaften vieler Alkyd-Harze nicht optimal. So ist die Wasseraufnahme vielfach zu hoch. Darüber hinaus ist die Lösungsmittelbeständigkeit oder die Härte für viele Anwendungen zu gering.

Dementsprechend wurden Versuche unternommen die zuvor dargelegten klassischen Lacke auf Alkyd-Basis zu ersetzen. Eine auf Lösungspolymeren basierende Lackzusammensetzung auf Basis von Vinylmonomeren wird beispielsweise in DE-A-101 06 561 beschrieben. Allerdings umfasst diese Zusammensetzung einen hohen Anteil an organischen Lösungsmitteln.

Des Weiteren sind auch wässrige Dispersionen auf Basis von (Meth)acrylat-Polymeren bekannt. Beispielsweise beschreibt die Druckschrift DE-A-41 05 134 wässrige Dispersionen, die als Bindemittel in Lacken eingesetzt werden können. Die Herstellung dieser Bindemittel erfolgt jedoch über mehrere Stufen, wobei zunächst ein Lösungspolymerisat erzeugt wird, welches nach einer Neutralisation in einer Emulsionspolymerisation eingesetzt wird.

Darüber hinaus werden in DE-A-25 13 516 wässrige Dispersionen beschrieben, die Polymere auf Basis von (Meth)acrylaten umfassen, wobei ein Teil (Meth)acrylate ungesättigte Alkoholreste enthält. Nachteilig an den beschriebenen Dispersionen ist insbesondere deren aufwendige Herstellung, wobei die Polymere auf Basis von (Meth)acrylaten durch Lösungspolymerisation erhalten werden. Hierbei weisen diese Polymere einen hohen Anteil an Säuregruppen auf, der im Bereich von 5 bis 20 Gew.-% liegt, bezogen auf das Lösungspolymer.

Die Druckschrift DE-A-26 38 544 beschreibt oxidativ trocknende wässrige Dispersionen, die Emulsionspolymere auf Basis von (Meth)acrylaten umfassen, wobei ein Teil der eingesetzten (Meth)acrylate ungesättigte Alkoholreste aufweist. Allerdings wurden Kettenüberträger zur Herstellung der Emulsionspolymere eingesetzt, so dass Emulsionspolymer eine hohe Löslichkeit zeigt.

Des Weiteren werden wässrige Dispersionen, die oxidativ trocknende Polymere umfassen, in F.-B. Chen, G. Bufkin, "Crosslinkable Emulsion Polymers by Autooxidation II", Journal of Applied Polymer Science, Vol. 30, 4551 -4570 (1985) dargelegt. Die Polymere enthalten 2 bis 8 Gew.-% an Einheiten, die von (Meth)acrylaten mit ungesättigten, langkettigen Alkoholresten abgeleitet sind. Allerdings enthalten diese Polymere keine Einheiten, die durch Polymerisation von Säuregruppen-enthaltenden Monomeren erhalten werden. Die Haltbarkeit dieser Dispersionen sowie die Härte der Lacke sind für viele Anwendungen nicht ausreichend.

Darüber hinaus beschreiben die Druckschriften US 5,750,751, EP-A-1 044 993 und WO 2006/013061 Beschichtungsmittel, die Polymere auf Basis von Vinylmonomeren umfassen, die bei Raumtemperatur vernetzen können. Die Polymere können sowohl durch Lösungspolymerisation als auch durch Emulsionspolymerisation erhalten werden. Die zu polymerisierenden Monomermischungen können unter anderem (Meth)acrylate umfassen, deren Alkoholreste durch ungesättigte Fettsäuren modifiziert sind. Ein Nachteil der zuvor dargelegten Lacke, die Polymerisate auf Basis von (Meth)acrylaten enthalten, ist deren hoher Preis. Weiterhin zeigen Beschichtungen, die aus den zuvor dargelegten Beschichtungsmitteln erhalten wurden, vielfach eine geringe Härte. In diesen Dokumenten finden sich keine Hinweise auf die Verwendung dieser Polymere in Alkyd-Harzen.

Darüber hinaus sind aus dem Stand der Technik auch Dispersionen bekannt, die neben Polymeren auf Basis von (Meth)acrylaten auch Alkyd-Harze umfassen können. Beispielsweise beschreibt das Dokument WO 98/22545 Polymere mit Einheiten, die von (Meth)acrylaten mit ungesättigten Alkoholresten abgeleitet sind. Diese Polymere können zusammen mit Alkyd-Harzen eingesetzt werden. Allerdings werden Lösungsmittel eingesetzt, um aus den beschriebenen Polymeren Lacke herzustellen. Wässrige Dispersionen werden in WO 98/22545 nicht beschrieben. Dementsprechend sind diese Zusammensetzungen mit den zuvor dargelegten Nachteilen behaftet.

Weiterhin beschreibt die japanische Druckschrift JP 59011376 Emulsionspolymere auf Ba-sis von (Meth)acrylaten. Diese Polymere können einen sehr hohen Gehalt an (Meth)acrylaten aufweisen, die ungesättigte Alkoholreste umfassen. Zwar werden Mischung mit weiteren Harzen dargelegt, jedoch werden explizit keine Zusammensetzungen dargelegt, die ein Alkyd-Harz und ein Polymerisat mit mindestens einem (Meth)acrylat-Segment aufweisen, das 1 bis 30 Gew.-% Einheiten, die von (Meth)acrylaten abgeleitet sind, die im Alkylrest mindestens eine Doppelbindung und 8 bis 40 Kohlenstoffatome aufweisen, 0,1 bis 10 Gew.-% Einheiten, die von Säuregruppen-haltigen Monomeren abgeleitet

sind, und 50 bis 98,9 Gew.-% Einheiten, die von (Meth)acrylaten mit 1 bis 6 Kohlenstoffatomen im Alkylrest abgeleitet sind, bezogen auf das Gewicht des (Meth)acrylat-Segments, umfasst. Nachteilig an den in JP 59011376 dargelegten Zusammensetzungen ist deren geringe Lagerfähigkeit.

Des Weiteren sind aus US 4,010,126 Zusammensetzungen bekannt, die ein mit (Meth)acrylat-Polymeren modifiziertes Alkyd-Harz umfassen, welches anschließend in einer Emulsionspolymerisation eingesetzt wird. Die Herstellung der beschriebenen Zusammensetzungen erfolgt über mehrere Schritte, so dass die Herstellung der beschriebenen Harze sehr aufwendig ist.

Weiterhin beschreibt die Druckschrift EP-A-0 267 562 Dispersionen, die modifizierte Alkyd-Harze umfassen. Zur Herstellung der Alkyd-Harze werden insbesondere Copolymere eingesetzt, die durch Lösungspolymerisation von (Meth)acrylaten und ungesättigten Fettsäuren erhalten werden. Hierbei werden diese Fettsäuren in das Copolymer über deren Doppelbindungen eingebaut. Die Herstellung dieser Harze erfolgt über mehrere Schritte, wobei insbesondere große Mengen an Lösungsmitteln eingesetzt werden. Darüber hinaus sind große Mengen an Ethylenglycolmonobutylether erforderlich, um die Dispersionen zu erhalten. Ähnliche Dispersionen werden ebenfalls in DE-A-34 32 482 beschrieben, wobei diese Dispersionen die gleichen Nachteile aufweisen, wie die in EP-A-0 267 562 dargelegten.

Des Weiteren sind aus EP-A-1 578 864 wässrige Alkyd-Harze bekannt, die mit (Meth)acrylat-Polymeren modifiziert wurden. Zur Herstellung der (Meth)acryl-Polymere wurden große Mengen an ungesättigten Fettsäuren eingesetzt. Allerdings ist die komplexe Herstellung dieser Dispersionen von Nachteil. Darüber hinaus führen die beschriebenen Dispersionen zu Beschichtungen mit einer relativ geringen Härte.

Die Druckschrift DE 33 39 212 beschreibt wässrige Dispersionen die Polymeren auf Basis von Säuregruppen enthaltende (Meth)acrylate und Alkyd-Harze enthalten.

In Anbetracht des Standes der Technik ist es nun Aufgabe der vorliegenden Erfindung Beschichtungsmittel und Beschichtungen mit hervorragenden Eigenschaften bereitzustellen. Insbesondere sollten die Beschichtungsmittel einen sehr geringen Restmonomergehalt aufweisen. Weiterhin war es mithin eine Aufgabe der vorliegenden Erfindung eine Dispersion bereitzustellen, die eine besonders lange Lagerfähigkeit und Haltbarkeit aufweist. Des Weiteren sollte die Härte der Beschichtungen, die aus Beschichtungsmitteln erhältlich sind, über einen weiten Bereich variiert werden können. Gemäß einem besonderen Aspekt der vorliegenden Erfindung sollten insbesondere Zusammensetzungen bereitgestellt werden, die zu sehr harten, kratzfesten Beschichtungen führen.

Des Weiteren sollten die aus den Beschichtungsmitteln erhältlichen Beschichtungen eine hohe Lösungsmittelbeständigkeit aufweisen. Eine weitere Aufgabe ist darin zu sehen Beschichtungsmittel ohne flüchtige organische Lösungsmittel zur Verfügung zu stellen. Die aus den wässrigen Dispersionen erhältlichen Beschichtungen sollten eine hohe Witterungsbeständigkeit, insbesondere eine hohe UV-Beständigkeit aufweisen. Darüber hinaus sollten die aus den Beschichtungsmitteln erhältlichen Filme nach kurzer Zeit eine geringe Klebrigkeit aufweisen. Weiterhin sollten die erfindungsgemäßen Beschichtungsmittel leicht und kostengünstig hergestellt werden können.

Gelöst werden diese sowie weitere nicht explizit genannte Aufgaben, die jedoch aus den hierin einleitend diskutierten Zusammenhängen ohne weiteres ableitbar oder erschließbar sind, durch wässrige Dispersionen mit allen Merkmalen des Patentanspruchs 1. Zweckmäßige Abwandlungen der erfindungsgemäßen Dispersionen werden in Unteransprüchen unter Schutz gestellt. Hinsichtlich der Verfahren zur Herstellung stellt Anspruch 22 eine Lösung der zugrunde liegenden Aufgaben zur Verfügung.

Gegenstand der vorliegenden Erfindung sind dementsprechend wässrige Dispersion umfassend
mindestens ein Alkyd-Harz und
mindestens ein Polymerisat mit mindestens einem (Meth)acrylat-Segment, das 1 bis 30 Gew.-% Einheiten, die von (Meth)acrylaten abgeleitet sind, die im Alkylrest mindestens eine Doppelbindung und 8 bis 40 Kohlenstoffatome aufweisen,
0,1 bis 10 Gew.-% Einheiten, die von Säuregruppen-haltigen Monomeren abgeleitet sind, und 50 bis 98,9 Gew.-% Einheiten, die von (Meth)acrylaten mit 1 bis 6 Kohlenstoffatomen im Alkylrest abgeleitet sind, jeweils bezogen auf das Gewicht des (Meth)acrylat-Segments, umfasst.

Durch die erfindungsgemäßen Maßnahmen können des Weiteren unter anderem die folgenden Vorteile erzielt werden:

Die erfindungsgemäßen Dispersionen weisen einen sehr geringen Restmonomergehalt auf.

Die Härte der Beschichtungen, die aus erfindungsgemäßen Dispersionen erhältlich sind, kann über einen weiten Bereich variiert werden. So können insbesondere sehr harte, kratzfeste Beschichtungen erhalten werden. Die aus den erfindungsgemäßen Dispersionen erhältlichen Beschichtungen zeigen eine überraschend hohe Lösungsmittelbeständigkeit, die sich insbesondere in Versuchen mit Methylisobutylketon (MIBK) oder Ethanol zeigt. So zeigen die erhaltenen Beschichtungen insbesondere bei Versuchen gemäß dem Möbeltest DIN 68861-1 eine hervorragende Einstufung. Hierbei können die Beschichtungen auch mit unpolaren Lösungsmitteln, insbesondere Waschbenzin gereinigt werden, ohne dass hierdurch die Beschichtung irreversibel beschädigt wird.

Die erfindungsgemäßen Dispersionen weisen vorzugsweise keine flüchtigen organischen Lösungsmittel auf. Darüber hinaus zeigen die erfindungsgemäßen Dispersionen eine hohe Lagerungsbeständigkeit, eine hohe Haltbarkeit

und eine sehr gute Lagerfähigkeit. Insbesondere tritt kaum eine Aggregatbildung auf.

Die aus den wässrigen Dispersionen erhältlichen Beschichtungen zeigen eine hohe Witterungsbeständigkeit, insbesondere eine hohe UV-Beständigkeit. Des Weiteren weisen die aus den wässrigen Dispersionen erhältlichen Filme nach kurzer Zeit eine geringe Klebrigkeit auf. Weiterhin zeigen die erfindungsgemäßen Beschichtungsmittel eine hohe Standfestigkeit des Nassfilms sowie eine erhöhte Offenzeit.

Darüber hinaus zeigen die aus den erfindungsgemäßen Dispersionen erhältlichen Beschichtungen auf vielen Substraten eine besonders hohe Haftfestigkeit, Abriebfestigkeit und Belastbarkeit. Bevorzugte Beschichtungen und mit den erfindungsgemäßen Beschichtungen beschichtete Substrate können insbesondere hohen mechanischen Belastungen ausgesetzt werden, ohne dass eine Rissbildung der Beschichtung eintritt.

Die erfindungsgemäßen Dispersionen lassen sich kostengünstig in großem Maßstab herstellen. Die erfindungsgemäßen Dispersionen sind umweltfreundlich und können sicher und ohne großen Aufwand verarbeitet und hergestellt werden. Hierbei zeigen die erfindungsgemäßen Dispersionen eine sehr hohe Scherstabilität.

Die erfindungsgemäßen wässrigen Dispersionen umfassen mindestens ein Alkyd-Harz. Alkyd-Harze sind seit langem bekannt, wobei hierunter im Allgemeinen Harze verstanden werden, die durch Kondensation von mehrwertigen Carbonsäuren und mehrwertigen Alkoholen erhalten werden, wobei diese Verbindungen im Allgemeinen mit langkettigen Alkoholen (Fettalkoholen), Fettsäuren bzw. Fettsäure-enthaltende Verbindungen, beispielsweise Fetten oder Ölen, modifiziert sind (DIN 55945; 1968). Alkyd-Harze werden beispielsweise in Ullmann's Encyclopedia of Industrial Chemistry 5. Auflage auf CD-ROM dargelegt. Neben diesen klassischen Alkyd-Harzen können auch Harze eingesetzt werden, die ähnliche Eigenschaften aufweisen. Diese Harze zeichnen sich ebenfalls durch einen hohen Gehalt an Gruppen auf, die von den zuvor dargelegten langkettigen Alkoholen (Fettalkoholen), Fettsäuren bzw. Fettsäure-enthaltende Verbindungen, beispielsweise Fetten oder Ölen, abgeleitet sind. Allerdings weisen diese Derivate nicht zwingend mehrwertige Carbonsäuren auf, sondern können beispielsweise durch Umsetzung von Polyolen mit Isocyanaten erhalten werden. Die einsetzbaren Alkyd-Harze können vorzugsweise mit Wasser gemischt oder verdünnt werden.

Bevorzugte mehrwertige Carbonsäuren zur Herstellung der in der erfindungsgemäßen Dispersion bevorzugt zu verwendenden Alkyd-Harze sind unter anderem Di- und Tricarbonsäuren, wie beispielsweise Phthalsäure, Isophthalsäure, 5-(Natriumsulfo)-isophthalsäure, Terephthalsäure, Trimellitsäure, 1,4-Cyclohexandicarbonsäure, Butandisäure, Maleinsäure, Fumarsäure, Sebazinsäure, Adipinsäure und Azelainsäure. Diese Säuren können auch als Anhydride zur Herstellung eingesetzt werden. Besonders bevorzugt werden aromatischen Dicarbonsäuren zur Herstellung der Alkyd-Harze eingesetzt. Der Anteil an mehrwertigen Carbonsäuren liegt vorzugsweise im Bereich von 2 bis 50 Gew.-%, besonders bevorzugt 5 bis 40 Gew.-%, bezogen auf das Gewicht der in der Reaktionsmischung eingesetzten Edukte zur Herstellung des Harzes.

Des Weiteren werden zur Herstellung der Alkyd-Harze mehrwertige Alkohole eingesetzt. Zu diesen Alkoholen gehören unter anderem Trimethylolpropan, Pentaerythrit, Dipentaerythrit, Trimethylolethan, Neopentylglycol, Ethylenglycol, 1,3-Butandiol, 1,4-Butandiol, 1,6-Hexandiol, 1,4-Cyclohexyldimethanol, Diethylenglycol, Triethylenglycol, Polyethylenglycol, Polytetrahydrofuran, Polycaprolactondiol, Polycaprolactontriol, Trimethylolmonoallylether, Trimethyloldiallylether, Pentaerythrittriallylether, Pentaerythritdiallylether, Pentaerythritmonoallylether, 2-Ethyl-2-(hydroxymethyl)-1,3-propanediol, 2-Methyl 1,3-propanediol. 2,2,4-Trimethylpentandiol, 2,2,4-Trimethyl-1,3-pentandiol, 2,2'-Bis(4-hydroxycyclohexy)propan (hydriertes Bisphenol A), Propylenglycol, Dipropylenglycol, Polypropylenglycol, Glycerin, und Sorbit. Hiervon sind insbesondere Trimethylolethan, Trimethylolpropan, Pentaerythrit und Sorbit bevorzugt. Gemäß einem besonderen Aspekt sind insbesondere Alkohole mit drei oder mehr Hydroxygruppen bevorzugt. Der Anteil an mehrwertigen Alkoholen liegt vorzugsweise im Bereich von 2 bis 50 Gew.-%, besonders bevorzugt 5 bis 40 Gew.-%, bezogen auf das Gewicht der in der Reaktionsmischung eingesetzten Edukte zur Herstellung des Harzes.

Darüber hinaus können insbesondere Fettsäuren zur Herstellung der zuvor dargelegten Alkyd-Harze eingesetzt werden. Hierbei können insbesondere gesättigte und ungesättigte Fettsäuren eingesetzt werden, wobei insbesondere Mischungen bevorzugt sind, die ungesättigte Fettsäuren enthalten. Bevorzugte Fettsäuren weisen 6 bis 30, besonders bevorzugt 10 bis 26 und ganz besonders bevorzugt 12 bis 22 Kohlenstoffatomen auf. Der Anteil an Fettsäuren liegt vorzugsweise im Bereich von 2 bis 90 Gew.-%, besonders bevorzugt 10 bis 70 Gew.-%, bezogen auf das Gewicht der in der Reaktionsmischung eingesetzten Edukte zur Herstellung des Harzes.

Zu den geeigneten gesättigten Fettsäuren gehören unter anderem Kaprylsäure, Kaprinsäure, Laurinsäure, Myristinsäure, Palmitinsäure, Margarinsäure, Arachinsäure, Behensäure, Lignocerinsäure, Cerotinsäure, Palmitolsäure und Stearinsäure.

Zu den bevorzugten ungesättigten Fettsäuren gehören unter anderem Undecylensäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und/oder Cervonsäure.

Des Weiteren können die zuvor dargelegten Fettsäuren auch in Form ihrer Ester, beispielsweise in Form von Triglyceriden eingesetzt werden.

Darüber hinaus können die zuvor dargelegten Alkyd-Harze weitere Komponenten aufweisen. Hierzu gehören beispielsweise einwertige Carbonsäuren, einwertige Alkohole oder Verbindungen, die zu emulgierenden Gruppen in

den Harzen führen, wie beispielsweise Polyethylenoxide. Weiterhin können die Alkyd-Harze Hydroxycarbonsäuren aufweisen, wie zum Beispiel 2-, 3-, 4-Hydroxybenzoesäure, Rizinolsäure, Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure und 2,2-Dimenthylolpentansäure.

Weiterhin können auch modifizierte Alkyd-Harze eingesetzt werden, die mit Harzen, insbesondere Kolophonium, mit Styrolpolymeren, mit Acrylpolymeren, mit Epoxiden, mit Urethanen, mit Polyamiden und/oder mit Siliconen modifiziert sind. Diese Modifikationen sind unter anderem in der zuvor dargelegten Patentliteratur und in Ullmann's Encyclopedia of Industrial Chemistry 5. Auflage auf CD-ROM dargelegt. Durch diese Ausgestaltungen können insbesondere die Antrocknung, die Haftfestigkeit, die Bewitterungsstabilität, die Lagerfähigkeit, die Chemikalienbeständigkeit, die Durchhärtung, die Standfestigkeit des Nassfilms und die Abriebfestigkeit verändert werden.

Beispielsweise können bevorzugt Alkyd-Harze eingesetzt werden, die mit Polymeren modifiziert sind, die durch radikalische Polymerisation erhältlich sind. Derartige Harze sind unter anderem aus den Druckschriften US 5,538,760, US 6,369,135 und DE-A- 199 57 161 bekannt.

Gemäß den Druckschriften US 5,538,760 und US 6,369,135 können modifizierte Alkyd-Harze unter anderem dadurch erhalten werden, dass man eine Monomermischung in Gegenwart einer Alkyd-Harzes polymerisiert. Das Gewichtsverhältnis von Monomermischung zu Alkyd-Harz liegt hierbei vorzugsweise im Bereich von 100:1 1 bis 1:4, bevorzugt 5:1 bis 1:1.

Besonders zweckmäßig sind unter anderem die in DE-A- 199 57 161 beschriebenen acrylatmodifizierten Alkydharze. Diese Alkyd-Harze weisen neben einem Alkyd-Kern Gruppen auf, die durch Polymerisation von (Meth)acrylaten erhalten werden.

Diese acrylatmodifizierten Alkydharze sind herstellbar, indem man in der Gegenwart mindestens eines wassermischbaren Diols.

(1) mindestens ein Alkydharz, das, bezogen auf seine Gesamtmenge, 0,1 bis 10 Gew.-% seitenständige und/oder endständige Allyloxygruppen enthält, in Wasser dispergiert, wodurch die Dispersion 1 resultiert,
(2) eine Mischung aus Methacrylsäure und mindestens einem weiteren carbonsäuregruppenfreien olefinisch ungesättigten Monomeren in der Dispersion 1 pfropfmischpolymersiert, wodurch die Dispersion 2 resultiert, und
(3) einmal oder n-mal

(3.1) mindestens ein säuregruppenfreies olefinisch ungesättigtes Monomer und/oder
(3.2) mindestens eine Mischung aus mindestens einem säuregruppenhaltigen olefinisch ungesättigten Monomeren und mindestens einem säuregruppenfreien olefinisch ungesättigten Monomeren in der aus dem jeweils vorangehenden Verfahrensschritt (2) oder (2) bis (n-1) resultierenden Dispersion 2 oder 2 bis n-1 pfropfmischpolymerisiert, mit der Maßgabe, dass im Verfahrensschritt (3) oder dessen Wiederholungen (3) bis (n) Säuregruppen in einer Menge eingebaut werden, die insgesamt höchstens 90 Mol-% der im Verfahrensschritt (2) eingebauten Menge an Säuregruppen entspricht.

Die zuvor dargelegten seitenständigen und/oder endständigen Allyloxygruppe können in dem Alkydharz in einer Menge von, jeweils bezogen auf das Alkydharz, 0,1 bis 10, vorzugsweise 0,2 bis 9, bevorzugt 0,3 bis 8, besonders bevorzugt, 0,4 bis 7, ganz besonders bevorzugt 0,5 bis 6 und insbesondere 0,6 bis 5 Gew-% enthalten sein. Das Sauerstoffatom der Allyloxygruppe kann Bestandteil einer Urethangruppe, einer Estergruppe oder einer Ethergruppe sein, die den Allylrest mit der Hauptkette des Alkydharzes verbindet.

Beispiele geeigneter Verbindungen zur Einführung von seitenständigen und/oder endständigen Allyloxygruppen sind Allylalkohol, 2-Hydroxyethylallylether, 3-Hydrox-ypropylallylether, Trimethylolpropanmono- oder -diallylether, Glycerinmono- oder -diallylether, Pentaerythritmono-, -di- oder -triallylether, Mannitmono-, -di-, -tri- oder tetraallylether, Dihydroxypropionsäure-, Dihydroxybernsteinsäure-, Dihydroxybenzoesäure-, 2,2-Dimethylolessigsäure-, 2,2-Dimethylolpropionsäure-, 2,2-Dimethylolbuttersäure- oder 2,2-Dimenthylolpentansäureallylester oder Allylurethan, von denen Trimethylolpropanmonoallyether von Vorteil ist. Zur Modifikation mit Acrylaten kann die Dispersion 1 in einer Stufe (2) mit Methacrylsäure und mindestens ein weiteres olefinisch ungesättigtes Monomer pfropfmischpolymerisiert werden. Die weiteren olefinisch ungesättigten Monomeren können außer den olefinisch ungesättigten Doppelbindungen noch reaktive funktionelle Gruppen - ausgenommen Carboxylgruppen -, beispielsweise isocyanatreaktive, carbamatreaktive, N-methylol- oder N-methyloletherreaktive oder alkoxycarbonylaminoreaktive Gruppen enthalten. Wesentlich ist hierbei, dass diese reaktiven funktionellen Gruppen unter den gegebenen Reaktionsbedingungen und der nachfolgenden Lagerung der erfindungsgemäßen Dispersionen keine Reaktionen mit den Carboxylgruppen der Methacrylsäure oder mit anderen gegebenenfalls vorhandenen reaktiven funktionellen Gruppen eingehen. Ein Beispiel für reaktive funktionelle Gruppen, die diese Anforderungen erfüllen, ist die Hydroxylgruppe. Diese Monomere sind an sich bekannt, wobei Beispiele in DE 199 57 161 dargelegt sind. Hierzu gehören insbesondere Hydroxyalkylestcr der Acrylsäure, der Methacrylsäure oder einer anderen alpha, betaolefinisch ungesättigten Carbonsäuren, Ester der Acrylsäure, der Methacrylsäure,

der Crotonsäure- oder der Ethacrylsäure mit bis zu 20 Kohlenstoffatomen im Alkylrest.

Weiterhin sind Alkyd-Harze bevorzugt, die gemäß der Druckschrift US 5,096,959 erhältlich sind. Diese Alkyd-Harze sind durch cycloaliphatische Polycarbonsäure modifiziert, wobei zur Modifikation insbesondere Cyclohexandicarbonsäuren und Cyclopentandicarbonsäuren geeignet sind.

Darüber hinaus können Alkyd-Harze eingesetzt werden, die mit Polyethylenglycol modifiziert sind. In einer großen Anzahl von Patentschriften wird die Herstellung wasseremulgierbarer Alkydharze durch Modifizierung mit Polyethylenglycol (PEG) beschrieben. Bei den meisten Verfahren werden etwa 10 bis 30 % PEG durch Um- oder Veresterung direkt in das Alkydharz eingebaut (s. unter anderem die USA-Patentschriften Nr. 2,634,245; 2,853,459; 3,133,032; 3,223,659; 3,379,548; 3,437,615; 3,437,618; 10 3,442,835; 3,457,206; 3,639,315; die deutsche OffenlegungsSchrift 14 95 032 oder die britischen Patentschriften Nr. 1,038,696 und Nr. 1,044,821).

Bevorzugte Alkyd-Harze, die mit Polyethylenglycol modifiziert sind, sind unter anderem aus der Druckschrift EP-A-0 029 145 bekannt. Gemäß dieser Druckschrift kann zunächst ein Polyethylenglycol mit epoxidgruppenhaltigen Carbonsäure umgesetzt werden. Das so erhaltene Reaktionsprodukt kann anschließend in der Reaktionsmischung zur Herstellung des Alkyd-Harzes eingesetzt werden. Bevorzugte Polyethylenglycole zur Modifikation der Alkydharze weisen beispielsweise ein Zahlenmittel des Molekulargewichts von 500 bis 5000 g/mol auf.

Besonders bevorzugte, mit Polyethylenglycol modifizierte Alkyd-Harze können weiter hin mit Copolymerisaten modifiziert werden, die durch Polymerisation von Methacrylsäure, ungesättigten Fettsäuren und Vinyl- und/oder Vinylidenverbindungen erhältlich sind.

Weiterhin zweckmäßig sind Alkyd-Harze, die mit Urethan-Gruppen modifiziert sind. Derartige Alkyd-Harze sind unter anderem in WO 2006/092211 und EP-A-1 533 342 dargelegt.

Gemäß einer zweckmäßigen Ausgestaltung können die in EP-A-1 533 342 beschriebenen Urethanalkydharze eingesetzt werden, die Bausteine enthalten, die von ungesättigten Fettsäuren A1, aliphatischen oder aromatischen oder αromatisch-aliphatischen Monocarbonsäuren A2, die frei von olefinischen Doppelbindungen sind, cycloaliphatische Dicarbonsäuren A3 oder deren Anhydride, mindestens dreiwertigen, bevorzugt mindestens vierwertigen Alkoholen A4, und aromatischen oder aliphatischen mehrfunktionellen, insbesondere difunktionellen Isocyanaten A5 abgeleitet sind. Das Urethanalkydharz wird bevorzugt in einer zweistufigen Reaktion hergestellt, wobei in der ersten Stufe die Komponenten A1 bis A4 verestert werden, wobei die Säurezahl des Produkts der ersten Stufe bevorzugt maximal 10 mg/g, besonders bevorzugt maximal 5 mg/g beträgt. In der zweiten Stufe wird das Hydroxylgruppen enthaltende Produkt der ersten Stufe unter Zugabe einer geringen Menge (bis zu 1 % der Masse des Produkts der ersten Stufe, bevorzugt bis zu 0,5 % von dessen Masse) eines tertiären Amins mit dem Isocyanat A5 umgesetzt, unter Molekülvergrößerung. Bevorzugte Urethanalkydharze weisen einen Staudinger-Index, gemessen in Chloroform bei 23 °C von mindestens 9 $cm^3/g$, bevorzugt mindestens von 11 $cm^3/g$ auf.

Vorzugsweise können Urethanalkyd-Harze eingesetzt werden, die durch Umsetzung von mehrwertigen Alkoholen A', modifizierten Fettsäuren B', Fettsäuren C', und mehrwertigen Isocyanaten D' erhältlich sind. Die modifizierten Fettsäuren B' können durch Umsetzung von ungesättigten Fettsäuren B1' mit ungesättigten Carbonsäuren B2' hergestellt werden. Diese Urethanalkyde sind unter anderem aus WO 2006/092211 bekannt. Die modifizierte Fettsäure B' weist vorzugsweise eine Säurezahl von mindestens 80 mg/g auf. Besonders bevorzugt liegt die Zunahme der Säurezahl durch die Pfropfung im Bereich von 80 mg/g bis 250 mg/g und ganz besonders bevorzugt im Bereich von 100 mg/g bis 150 mg/g, wobei die Säurezahl gemäß DIN EN ISO 2114 bestimmt werden kann. Die Iodzahl der zur Herstellung der Urethanalkyd-Harze eingesetzten Fettsäuren C' beträgt vorzugsweise mindestens 80 g/100 g und vorzugsweise mindestens 120 g/100 g. Zur Herstellung des in WO 2006/092211 beschriebenen Urethanalkyd-Harzes werden im Allgemeinen zunächst die Komponenten A', B' und C' umgesetzt, wobei das Kondensat vorzugsweise eine Hydroxyfunktionalität von mindestens 1,9, besonders bevorzugt mindestens 2 aufweist. Des Weiteren kann das Kondensat Gruppen aufweisen, die von mehrwertigen Carbonsäuren, insbesondere den zuvor dargelegten Di- und Tricarbonsäuren abgeleitet sind. Dieses Kondensat wird anschließend mit einem mehrwertigen Isocyant umgesetzt. Zu den bevorzugten mehrwertigen Isocyanaten gehören unter anderem 2,4- und 2,6-Toluylendiisocyanat sowie deren technische Gemische, Bis-(4-isocyanatophenyl)methan, Isophorondiisocyanat, Bis-(4-isocyanatocyclohexyl)methan und 1,6-Di-isocyanatohexan, und die von diesen abgeleiteten Isocyanurate, Allophanate und Biurete.

Neben den zuvor dargelegten klassischen Alkyd-Harzen, zu deren Herstellung im Allgemeinen Polycarbonsäuren eingesetzt werden, können auch weitere Harze eingesetzt werden, wie dies bereits zuvor dargelegt wurde. Hierzu gehören insbesondere Urethan-Harze, die durch Umsetzung von mehrwertigen Alkoholen mit mehrwertigen Isocyanaten erhalten werden können. Bevorzugte Urethan-Harze sind beispielsweise aus EP-A-1 129 147 bekannt. Diese können beispielsweise durch Umsetzung von Amidesterdiolen mit Polyolen und mehrwertigen Isocyanaten erhalten werden. Die gemäß EP-A-1 129 147 zu verwendenden Amidesterdiole können durch Umsetzung von Pflanzenölen mit N,N-Dialkanolaminen erhalten werden.

Gemäß einem bevorzugten Aspekt der vorliegenden Erfindung kann das Alkyd-Harz eine Iodzahl nach DIN 53241 von mindestens 1 g Iod/100 g, vorzugsweise von mindestens 10 g Iod/100 g, besonders bevorzugt von mindestens 15 g Iod/100 g aufweisen. Gemäß einem besonderen Aspekt der vorliegenden Erfindung kann die Iodzahl des Alkyd-Harzes im Bereich von 2 bis 100 g Iod pro 100 g Alkyd-Harz, besonders bevorzugt 15 bis 50 g Iod pro 100 g Alkyd-Harz liegen. Die Iodzahl kann anhand einer Dispersion bestimmt werden, wobei sich der Wert auf den Feststoffgehalt bezieht.

Zweckmäßig kann das Alkyd-Harz eine Säurezahl im Bereich von 0,1 bis 100 mg KOH/g, bevorzugt 1 bis 40 mg KOH/g und ganz besonders bevorzugt im Bereich von 2 bis 10 mg KOH/g aufweisen. Die Säurezahl kann gemäß DIN EN ISO 2114 anhand einer Dispersion bestimmt werden, wobei sich der Wert auf den Feststoffgehalt bezieht.

Die Hydroxyzahl des Alkyd-Harzes kann vorzugsweise im Bereich von 0 bis 400 mg KOH/g, besonders bevorzugt 1 bis 200 mg KOH/g und ganz besonders bevorzugt im Bereich von 3 bis 150 mg KOH/g liegen. Die Hydroxyzahl kann gemäß ASTM E222 anhand einer Dispersion bestimmt werden, wobei sich der Wert auf den Feststoffgehalt bezieht.

Die Herstellung der Alkyd-Harze ist seit langem bekannt und erfolgt durch Kondensation der zuvor dargelegten Alkohole und Säuren, wobei eine Modifikation sowohl während dieser Kondensation als auch nach dieser Kondensation erfolgen kann. In diesem Zusammenhang wird insbesondere auf die zuvor dargelegte Literatur verwiesen.

Darüber hinaus weisen die erfindungsgemäßen wässrigen Dispersionen mindestens ein Polymerisat mit mindestens einem (Meth)acrylat-Segment auf, das 1 bis 30 Gew.-% Einheiten, die von (Meth)acrylaten abgeleitet sind, die im Alkylrest mindestens eine Doppelbindung und 8 bis 40 Kohlenstoffatome aufweisen, 0,1 bis 10 Gew.-% Einheiten, die von Säuregruppen-haltigen Monomeren abgeleitet sind, und 50 bis 98,9 Gew.-% Einheiten, die von (Meth)acrylaten mit 1 bis 6 Kohlenstoffatomen im Alkylrest abgeleitet sind, bezogen auf das Gewicht des (Meth)acrylat-Segments, umfasst.

Der Begriff "Polymerisat mit mindestens einem (Meth)acrylat-Segment" bedeutet, dass die Dispersion Teilchen enthält, die durch Polymerisation von Monomermischungen erhalten wurden, die mindestens ein (Meth)acrylat umfassen, wobei diese Polymerisation in einem Schritt oder in Stufen erfolgen kann. Das Polymerisat kann hierbei ein oder mehrere Polymere, die beispielsweise durch entsprechende Lösungsmittel getrennt werden können, enthalten. Der Begriff "Segment" bedeutet, dass das Polymerisat mindestens einen Abschnitt mit (Meth)acrylat-Wiederholungseinheiten umfasst. Hierbei kann das Polymerisat aus einem derart aufgebauten Segment bestehen oder weitere Segmente aufweisen. Der Gewichtsanteil des (Meth)acrylat-Segments, bezogen auf das Gewicht des Polymerisats beträgt vorzugsweise mindestens 10 Gew.-%, besonders bevorzugt mindestens 20 Gew.-%. Das Polymerisat umfasst vorzugsweise mindestens 40 Gew.-%, besonders bevorzugt mindestens 60 Gew.-% und ganz besonders bevorzugt mindestens 90 Gew.-% (Meth) acrylate.

Das (Meth)acrylat-Segment des erfindungsgemäß einzusetzenden Polymerisats umfasst 1 bis 30 Gew.-%, bevorzugt 5 bis 25 Gew.-% und besonders bevorzugt 10 bis 20 Gew.-% Einheiten, die von (Meth)acrylaten abgeleitet sind, die im Alkylrest mindestens eine Doppelbindung und 8 bis 40 Kohlenstoffatome aufweisen, bezogen auf das Gesamtgewicht des (Meth)acrylat-Segments. Das Polymerisat kann bevorzugt durch radikalische Polymerisation erhalten werden. Dementsprechend ergibt sich der Gewichtsanteil an Einheiten aus den zur Herstellung des (Meth)acrylat-Segments eingesetzten Gewichtsanteilen an entsprechenden Monomeren.

Der Ausdruck (Meth)acrylate umfasst Methacrylate und Acrylate sowie Mischungen aus beiden. (Meth)acrylate, die im Alkylrest mindestens eine Doppelbindung und 8 bis 40 Kohlenstoffatome aufweisen, sind Ester der (Meth)acrylsäure, deren Alkoholrest mindestens eine Doppelbindung und 8 bis 40 Kohlenstoffatome aufweist. Der Alkyl- bzw. Alkoholrest kann vorzugsweise 10 bis 30 und besonders bevorzugt 12 bis 20 Kohlenstoffatome aufweisen, wobei dieser Rest Heteroatome, insbesondere Sauerstoff-, Stickstoff oder Schwefelatome umfassen kann. Der Alkoholrest kann eine, zwei, drei oder mehr Doppelbindungen aufweisen. Die Polymerisationsbedingungen bei denen das Polymerisat hergestellt wird, werden vorzugsweise so gewählt, dass ein möglichst großer Anteil der Doppelbindungen des Alkoholrests bei der Polymerisation erhalten bleibt. Dies kann beispielsweise durch sterische Hinderung der im Alkoholrest enthaltenen Doppelbindungen erfolgen.

Die Iodzahl der zur Herstellung der Polymerisate einzusetzenden (Meth)acrylate, die im Alkylrest mindestens eine Doppelbindung und 8 bis 40 Kohlenstoffatome aufweisen, beträgt vorzugsweise mindestens 40, besonders bevorzugt mindestens 80 und ganz besonders bevorzugt mindestens 140 g Iod/100 g (Meth)acrylat.

Derartige (Meth)acrylate entsprechen im Allgemeinen der Formel (I)

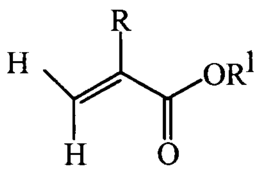

(I),

worin der Rest R Wasserstoff oder Methyl darstellt und $R^1$ einen linearen oder verzweigten Rest mit 8 bis 40 Kohlenstoffatomen bedeutet, der mindestens eine Doppelbindung aufweist.

(Meth)acrylate, die im Alkylrest mindestens eine Doppelbindung und 8 bis 40 Kohlenstoffatome aufweisen, können beispielsweise durch Veresterung von (Meth)acrylsäure, Umsetzung von (Meth)acryloylhalogeniden oder

Umesterung von (Meth)acrylaten mit Alkoholen erhalten werden, die mindestens eine Doppelbindung und 8 bis 40 Kohlenstoffatomen aufweisen. Diese Reaktionen sind beispielsweise in Ullmann's Encyclopedia of Industrial Chemistry 5. Auflage auf CD-ROM oder F.-B. Chen, G. Bufkin, "Crosslinkable Emulsion Polymers by Autooxidation I", Journal of Applied Polymer Science, Vol. 30, 4571-4582 (1985) dargelegt.

Zu den hierfür geeigneten Alkoholen gehören unter anderem Octenol, Nonenol, Decenol, Undecenol, Dodecenol, Tridecenol, Tetradecenol, Pentadecenol, Hexadecenol, Heptadecenol, Octadecenol, Nonadecenol, Ikosenol, Docosenol, Octan-dien-ol, Nonan-dien-ol, Decan-dien-ol, Undecan-dien-ol, Dodecan-dienol, Tridecan-dien-ol, Tetradecan-dien-ol, Pentadecan-dien-ol, Hexadecan-dienol, Heptadecan-dien-ol, Octadecan-dien-ol, Octadecan-trien-ol, Nonadecandien-ol, Ikosan-dien-ol und/oder Docosan-dien-ol. Diese so genannten Fettalkohole sind teilweise kommerziell erhältlich oder können aus Fettsäuren erhalten werden, wobei diese Umsetzung beispielsweise in F.-B. Chen, G. Bufkin, Journal of Applied Polymer Science, Vol. 30, 4571 -4582 (1985) dargelegt ist.

Zu den bevorzugten (Meth)acrylaten, die durch dieses Verfahren erhältlich sind, gehören insbesondere Octadecan-dien-yl-(meth)acrylat, Octadecan-trienyl-(meth)acrylat, Hexadecenyl(meth)acrylat, Octadecenyl(meth)acrylat und Hexadecan-dien-yl-(meth)acrylat.

Darüber hinaus können (Meth)acrylate, die im Alkylrest mindestens eine Doppelbindung und 8 bis 40 Kohlenstoffatome aufweisen, auch durch Umsetzung von ungesättigten Fettsäuren mit (Meth)acrylaten, die im Alkoholrest reaktive Gruppen aufweisen, erhalten werden. Zu den reaktiven Gruppen gehören insbesondere Hydroxygruppen sowie Epoxygruppen. Dementsprechend können beispielsweise Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1,6-hexandiol(meth)acrylat, 1,10-Decandiol(meth)acrylat; oder Epoxygruppen enthaltende (Meth)acrylate, beispielsweise Glycidyl(meth)acrylat als Edukte zur Herstellung der zuvor genannten (Meth)acrylate eingesetzt werden.

Geeignete Fettsäuren zur Umsetzung mit den zuvor genannten (Meth)acrylaten sind vielfach kommerziell erhältlich und werden aus natürlichen Quellen erhalten. Zu diesen gehören unter anderem Undecylensäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und/oder Cervonsäure.

Zu den bevorzugten (Meth)acrylaten, die durch dieses Verfahren erhältlich sind, gehören insbesondere (Meth) acryloyloxy-2-hydroxypropyl-linolsäureester, (Meth)acryloyloxy-2-hydroxypropyl-linolensäureester und (Meth)acryloyloxy-2-hydroxypropyl-ölsäureester.

Die Umsetzung der ungesättigten Fettsäuren mit (Meth)acrylaten, die reaktive Gruppen im Alkoholrest aufweisen, ist an sich bekannt und beispielsweise in DE-A-41 05 134, DE-A-25 13 516, DE-A-26 38 544 und US 5,750,751 dargelegt.

Die zuvor dargelegten (Meth)acrylate mit mindestens einer Doppelbindung können einzeln oder als Mischung von zwei oder mehr (Meth)acrylaten eingesetzt werden.

Überraschende Vorteile zeigen insbesondere Polymerisate, die einen hohen Anteil an Einheiten umfassen, die von (Meth)acryloyloxy-2-hydroxypropyllinolsäureester abgeleitet sind. Hierdurch können insbesondere relativ kratzfeste, lösungsmittelbeständige Beschichtungen erzielt werden, wobei die Beschichtungsmittel besonders einfach verarbeitet werden können und eine überraschend hohe Lagerstabilität aufweisen.

Diese Vorteile lassen sich insbesondere mit Polymerisaten erzielen, die mindestens 20 Gew.-%, bevorzugt mindestens 40 Gew.-% und ganz besonders bevorzugt mindestens 50 Gew.-% an Einheiten umfassen, die von (Meth) acryloyloxy-2-hydroxypropyl-linolsäureester abgeleitet sind, bezogen auf das Gewicht der Einheiten, die von (Meth) acrylaten abgeleitet sind, die im Alkylrest mindestens eine Doppelbindung und 8 bis 40 Kohlenstoffatome aufweisen. Bevorzugt weist das Polymerisat 45 Gew.-% bis 80 Gew.-%, besonders bevorzugt 55 bis 70 Gew.-% an Einheiten auf, die von (Meth)acryloyloxy-2-hydroxypropyl-linolsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

Gemäß einem weiteren Aspekt der vorliegenden Erfindung sind Polymerisate bevorzugt, die mindestens 5, vorzugsweise mindestens 10 Gew.-% und besonders bevorzugt mindestesn 15 Gew.-% an Einheiten umfassen, die von (Meth)acryloyloxy-2-hydroxypropyl-ölsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen. Bevorzugt weist das Polymerisat 15 Gew.-% bis 45 Gew.-%, besonders bevorzugt 20 bis 35 Gew.-% an Einheiten auf, die von (Meth)acryloyloxy-2-hydroxypropyl-ölsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

Besondere Verbesserungen können weiterhin dadurch erzielt werden, dass das Gewichtsverhältnis von Einheiten, die von (Meth)acryloyloxy-2-hydroxypropyl-linolsäureester abgeleitet sind, zu Einheiten, die von (Meth)acryloyloxy-2-hydroxypropyl-ölsäureester abgeleitet sind, größer oder gleich 1 ist, wobei dieses Gewichtsverhältnis besonders bevorzugt im Bereich von 8:1 bis 1:1, besonders bevorzugt 5:1 bis 3:2 liegt.

Des Weiteren umfasst das (Meth)acrylat-Segment des erfindungsgemäß einzusetzenden Polymerisats 0,1 bis

10 Gew.-%, bevorzugt 0,5 bis 8 Gew.-% und besonders bevorzugt 1 bis 5 Gew.-% Einheiten, die von Säuregruppenhaltigen Monomeren abgeleitet sind, bezogen auf das Gesamtgewicht des (Meth)acrylat-Segments.

Säuregruppen-haltige Monomere sind Verbindungen, die sich vorzugsweise radikalisch mit den zuvor dargelegten (Meth)acrylaten copolymerisieren lassen. Bevorzugt weisen die Säuregruppen-haltigen Monomere 2 bis 7 Kohlenstoffatome sowie eine endständige Doppelbindung auf. Hierzu gehören beispielsweise Monomere mit einer Sulfonsäuregruppe, wie zum Beispiel Vinylsulfonsäure; Monomere mit einer Phosphonsäuregruppe, wie zum Beispiel Vinylphosphonsäure und ungesättigte Carbonsäuren, wie zum Beispiel Methacrylsäure, Acrylsäure, Fumarsäure und Maleinsäure. Besonders bevorzugt sind Methacrylsäure und Acrylsäure. Die Säuregruppen-haltigen Monomere können einzeln oder als Mischung von zwei, drei oder mehr Säuregruppen-haltigen Monomeren eingesetzt werden.

Des Weiteren umfasst das (Meth)acrylat-Segment des erfindungsgemäß einzusetzenden Polymerisats 50 bis 98,9 Gew.-%, bevorzugt 60 bis 95 Gew.-% und besonders bevorzugt 70 bis 90 Gew.-% Einheiten, die von (Meth)acrylaten mit 1 bis 6 Kohlenstoffatomen im Alkylrest abgeleitet sind, bezogen auf das Gesamtgewicht des (Meth)acrylat-Segments.

Derartige (Meth)acrylate entsprechen im Allgemeinen der Formel (II)

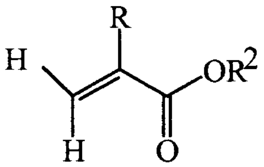

(II),

worin der Rest R Wasserstoff oder Methyl darstellt und $R^2$ einen linearen oder verzweigten Rest mit 1 bis 6 Kohlenstoffatomen, vorzugsweise 1 bis 4 Kohlenstoffatomen bedeutet.

Hierzu gehören insbesondere (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat und Pentyl(meth)acrylat, Hexyl(meth)acrylat; Cycloalkyl(meth)acrylate, wie Cyclopentyl(meth)acrylat, Cyclohexyl(meth)acrylat; und

(Meth)acrylate, die sich von ungesättigten Alkoholen ableiten, wie 2-Propinyl(meth)acrylat, Allyl(meth)acrylat und Vinyl(meth)acrylat.

Besonders bevorzugt werden Mischungen eingesetzt, die Methacrylate und Acrylate umfassen. So können insbesondere Mischungen von Methylmethacrylat und Acrylaten mit 2 bis 6 Kohlenstoffen, wie Ethylacrylat, Butylacrylat und Hexylacrylat verwendet werden.

Neben den zuvor genannten Einheiten kann das (Meth)acrylat-Segment des erfindungsgemäß einzusetzenden Polymerisats Einheiten aufweisen, die von Comonomeren abgeleitet sind. Diese Comonomere unterscheiden sich von den zuvor dargelegten Einheiten des Polymerisats, lassen sich jedoch mit den zuvor dargelegten Monomeren copolymerisieren.

Hierzu gehören beispielsweise (Meth)acrylate mit mindestens 7 Kohlenstoffatomen im Alkylrest, die sich von gesättigten Alkoholen ableiten, wie wie beispielsweise 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; Cycloalkyl(meth)acrylate, wie 3-Vinylcyclohexyl(meth)acrylat, Bornyl(meth)acrylat, Cycloalkyl(meth)acrylate, wie 2,4,5-Tri-t-butyl-3-vinylcyclohexyl(meth)acrylat, 2,3,4,5-Tetra-t-butylcyclohexyl(meth)acrylat; Nitrile der (Meth)acrylsäure und andere stickstoffhaltige Methacrylate, wie N-(Methacryloyloxyethyl)diisobutylketimin, N-(Methacryloyloxyethyl)dihexadecylketimin, Methacryloylamidoacetonitril, 2-Methacryloyloxyethylmethylcyanamid, Cyanomethylmethacrylat; Aryl(meth)acrylate, wie Benzyl(meth)acrylat oder Phenyl(meth)acrylat, wobei die Arylreste jeweils unsubstituiert oder bis zu vierfach substituiert sein können; (Meth)acrylate, die zwei oder mehr (Meth)acryl-Gruppen aufweisen, Glycol-di(meth)acrylate, wie Ethylenglycoldi(meth)acrylat, Diethylenglycol-di(meth)acrylat, Triethylenglycoldi(meth)acrylat, Tetra- und Polyethylenglycol-di(meth)acrylat, 1,3- Butandiol(meth)acrylat, 1,4-Butandiol(meth)acrylat, 1,6-Hexandioldi(meth)acrylat, Glycerindi(meth)acrylat; Dimethacrylate von ethoxyliertem Bisphenol A; (Meth)acrylate mit drei oder mehr Doppelbindungen, wie z.B. Glycerintri(meth)acrylat, Trimethylolpropantri(meth)acrylat, Pentaerythrit-tetra(meth)acrylat und Dipentaerythritpenta(meth)acrylat;

Vinylhalogenide, wie beispielsweise Vinylchlorid, Vinylfluorid, Vinylidenchlorid und Vinylidenfluorid; heterocyclische (Meth)acrylate, wie 2 (1 Imidazolyl)ethyl(meth)acrylat, 2 (4 Morpholinyl)ethyl(meth)acrylat und 1 (2 Methacryloy-loxyethyl)-2-pyrrolidon;
Vinylester, wie Vinylacetat;
Styrol, substituierte Styrole mit einem Alkylsubstituenten in der Seitenkette, wie z. B. α-Methylstyrol und ß-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Ester der Maleinsäure, beispielsweise Maleinsäuredimethylester, Methylmaleinsäureanhydrid, Maleinimid, Methylmaleinimid; und Fumarsäurederivate, wie Fumarsäuredimethylester.

Der Anteil an Einheiten, die von Comonomeren abgeleitet sind, kann je nach Einsatzzweck und Eigenschaftsprofil des Polymers variiert werden. Im Allgemeinen kann dieser Anteil im Bereich von 0 bis 45 Gew.-%, vorzugsweise 2 bis 30 Gew.-% und besonders bevorzugt 3 bis 10 Gew.-% liegen, bezogen auf das Gesamtgewicht des (Meth)acrylat-Segments.

Die Bewitterungsfestigkeit der Beschichtungen kann insbesondere durch eine Verringerung des Anteils an Styrolmonomeren in dem Beschichtungsmittel bzw. dem Emulsionspolymer verbessert werden, so dass besonders UV-beständige Beschichtungen durch ein styrolfreies Beschichtungsmittel erhalten werden können. Gemäß einer besonderen Abwandlung der vorliegenden Erfindung weist das Polymerisat mit mindestens einem (Meth)acrylat-Segment vorzugsweise höchstens 30 Gew.-%, besonders bevorzugt höchstens 15 Gew.-% an Einheiten auf, die von Styrol, substituierten Styrolen mit einem Alkylsubstituenten in der Seitenkette, substituierte Styrolen mit einem Alkylsubstitutenten am Ring und/oder halogenierten Styrolen abgeleitet sind, bezogen auf das Gesamtgewicht des (Meth)acrylat-Segments.

Besonders kratzfeste und lösungsmittelbeständige Beschichtungen können insbesondere dadurch erhalten werden, dass das Polymerisat mit mindestens einem (Meth)acrylat-Segment höchstens 10 Gew.-% an Einheiten umfasst, die von (Meth)acrylaten abgeleitet sind, die durch Umsetzung von gesättigten Fettsäuren mit mindestens einem (Meth) acrylat, das im Alkoholrest reaktive Gruppen aufweist, erhältlich sind, bezogen auf das Gesamtgewicht des (Meth) acrylat-Segments. Überraschende Verbesserungen zeigen diese Beschichtungen insbesondere mit Polymerisaten, die vorzugsweise 0,05 bis 5, besonders bevorzugt 0,1 bis 3 Gew.-% an Einheiten umfassen, die von (Meth)acrylaten abgeleitet sind, die durch Umsetzung von gesättigten Fettsäuren mit mindestens einem (Meth)acrylat, das im Alkoholrest reaktive Gruppen aufweist, erhältlich sind, bezogen auf das Gesamtgewicht des (Meth)acrylat-Segments. Hierbei kann als (Meth)acrylat mit einer reaktiven Gruppe im Alkoholrest bevorzugt Glycidyl(meth)acrylat eingesetzt werden. Gesättigte Fettsäuren, die mit einem (Meth)acrylat, umfassend mindestens eine reaktive Gruppe im Alkoholrest, vorzugsweise Glycidyl(meth)acrylat, umgesetzt werden können umfassen bevorzugt 10 bis 26, besonders bevorzugt 12 bis 22 Kohlenstoffatome. Zu den gesättigten Fettsäuren mit 10 bis 26 Kohlenstoffatomen gehören insbesondere Kaprylsäure, Kaprinsäure, Laurinsäure, Myristinsäure, Palmitinsäure, Margarinsäure, Arachinsäure, Behensäure, Lignocerinsäure, Cerotinsäure, Palmitolsäure und Stearinsäure.

Vorzugsweise kann das Polymerisat mit mindestens einem (Meth)acrylat-Segment einen Anteil von 2 bis 60 Gew.-%, besonders bevorzugt 10 bis 50 Gew.-% und ganz besonders bevorzugt 20 bis 40 Gew.-% aufweisen, bezogen auf das Gewicht des Polymerisats mit mindestens einem (Meth)acrylat-Segment, der in Tetrahydrofuran (THF) bei 20°C löslich ist. Zur Bestimmung des löslichen Anteils wird eine unter Sauerstoffausschluss getrocknete Probe des Polymerisats mit mindestens einem (Meth)acrylat-Segment in einer 200fachen Menge an Lösungsmittel, bezogen auf das Gewicht der Probe, bei 20°C für 4 h gelagert. Zum Ausschluss des Sauerstoffs kann die Probe beispielsweise unter Stickstoff oder unter Vakuum getrocknet werden. Anschließend wird die Lösung von dem unlöslichen Anteil, beispielsweise durch Filtration getrennt. Nach dem Verdampfen des Lösungsmittels wird das Gewicht des Rückstands bestimmt. Beispielsweise kann eine 0,5 g Probe eines unter Vakuum getrockneten Emulsionspolymeren in 150 ml THF 4 Stunden gelagert werden.

Gemäß einer bevorzugten Abwandlung der vorliegenden Erfindung kann ein Polymerisat mit mindestens einem (Meth)acrylat-Segment eine Quellung von mindestens 1000%, besonders bevorzugt mindestens 1400% und ganz besonders bevorzugt mindestens 1600% in Tetrahydrofuran (THF) bei 20°C aufweisen. Der obere Grenzwert der Quellung ist an sich nicht kritisch, wobei die Quellung bevorzugt höchstens 5000%, besonders bevorzugt höchstens 3000% und ganz besonders bevorzugt höchstens 2500% beträgt. Zur Bestimmung der Quellung wird eine unter Sauerstoffausschluss getrocknete Probe des Polymerisats mit mindestens einem (Meth)acrylat-Segment bei 20°C für 4 Stunden in einer 200fachen Menge an THF gelagert. Hierdurch quillt die Probe auf. Die so gequollene Probe wird von dem überstehenden Lösungsmittel getrennt. Anschließend wird das Lösungsmittel aus der Probe entfernt. Beispielsweise kann

ein Großteil des Lösungsmittels bei Raumtemperatur (20°C) verdampft werden. Lösungsmittelreste können im Trokkenschrank (140°C) entfernt werden, wobei dies im Allgemeinen innerhalb von 1 Stunde gelingt. Aus dem Gewicht des durch die Probe aufgenommenen Lösungsmittels und dem Gewicht der trocknen Probe ergibt sich die Quellung. Darüber hinaus ergibt sich durch die Differenz des Gewichts der Probe vor dem Quellungsexperiment und dem Gewicht der getrockneten Probe nach dem Quellungsexperiment der lösliche Anteil des Emulsionspolymeren.

Der Teilchenradius des Polymerisats mit mindestens einem (Meth)acrylat-Segment kann in einem weiten Bereich liegen. So können insbesondere Polymerisate mit einem Teilchenradius im Bereich von 10 bis 500 nm, bevorzugt 10 bis 100 nm, besonders bevorzugt 20 bis 60 nm eingesetzt werden. Insbesondere Teilchenradien unter 50 nm können vorteilhaft für die Filmbildung und die Beschichtungseigenschaften sein.

Gemäß einem besonderen Aspekt der vorliegenden Erfindung kann das Polymerisat mit mindestens einem (Meth)acrylat-Segment einen Teilchenradius von mindestens 50 nm aufweisen. Vorzugsweise liegt der Radius der Teilchen im Bereich von 60 nm bis 500 nm, besonders bevorzugt 70 bis 150 nm und ganz besonders bevorzugt 75 bis 100 nm. Der Radius der Teilchen kann durch PCS (Photon Correlation Spektroscopy) bestimmt werden, wobei sich die angegebenen Daten auf den d50-Wert beziehen (50% der Teilchen sind kleiner, 50% sind größer). Hierzu kann beispielsweise ein Beckman Coulter N5 Submicron Particle Size Analyzer eingesetzt werden. Durch die Verwendung von Polymerisaten mit den zuvor genannten Teilchenradien kann die Lagerfähigkeit der Dispersionen überraschend verbessert werden.

Die Glasübergangstemperatur des (Meth)acrylat-Segments liegt vorzugsweise im Bereich von -30 °C bis 70°C besonders bevorzugt im Bereich von -20 bis 40°C und ganz besonders bevorzugt im Bereich von 0 bis 25 °C. Die Glasübergangstemperatur kann über die Art und den Anteil der zur Herstellung des (Meth)acrylat-Segments verwendeten Monomere beeinflusst werden. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei $x_n$ für den Massebruch (Gew.-%/100) des Monomeren n steht und $Tg_n$ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.

Die Architektur des Polymerisats ist für viele Anwendungen und Eigenschaften nicht kritisch. Dementsprechend kann das Polymerisat statistische Copolymere, Gradienten-Copolymere, Blockcopolymere und/oder Pfropfcopolymere umfassen. Blockcopolymere bzw. Gradienten-Copolymere kann man beispielsweise dadurch erhalten, dass man die Monomerenzusammensetzung während des Kettenwachstums diskontinuierlich verändert. Gemäß einem bevorzugten Aspekt der vorliegenden Erfindung umfasst das Polymerisat ein statistisches Copolymer, bei welchem die Monomerzusammensetzung über die Polymerisation im Wesentlichen konstant ist. Da die Monomere jedoch unterschiedliche Copolymerisationsparameter aufweisen können, kann die genaue Zusammensetzung über die Polymerkette des Polymerisats schwanken.

Das Polymerisat kann ein homogenes Polymer darstellen, welches beispielsweise in einer wässrigen Dispersion Teilchen mit einer gleich bleibenden Zusammensetzung bildet. In diesem Fall kann das Polymerisat aus einem oder mehrere (Meth)acrylat-Segmenten bestehen, die 1 bis 30 Gew.-% Einheiten, die von (Meth)acrylaten abgeleitet sind, die im Alkylrest mindestens eine Doppelbindung und 8 bis 40 Kohlenstoffatome aufweisen, 0,1 bis 10 Gew.-% Einheiten, die von Säuregruppen-haltigen Monomeren abgeleitet sind, und 50 bis 98,9 Gew.-% Einheiten, die von (Meth)acrylaten mit 1 bis 6 Kohlenstoffatomen im Alkylrest abgeleitet sind, bezogen auf das Gewicht des (Meth)acrylat-Segments, umfassen.

Gemäß einer weiteren Ausführungsform kann das Polymerisat ein Kern-Schale-Polymer darstellen, welches eine, zwei, drei oder mehr Schalen aufweisen kann. Hierbei bildet das (Meth)acrylat-Segment vorzugsweise die äußerste Schale des Kern-Schale-Polymers. Die Schale kann über kovalente Bindungen mit dem Kern oder den inneren Schalen verbunden sein. Weiterhin kann die Schale auch auf den Kern oder eine innere Schale polymerisiert werden. In dieser Ausführungsform können die Polymere der äußersten Schale vielfach durch geeignete Lösungsmittel vom Kern getrennt und isoliert werden.

Vorzugsweise kann das Gewichtsverhältnis von (Meth)acrylat-Segment zu Kern im Bereich von 2:1 bis 1:6, besonders bevorzugt 1:1 bis 1:3 liegen.

Der Kern kann vorzugsweise aus Polymeren gebildet werden, die 50 bis 100 Gew.-%, vorzugsweise 60 bis 90

Gew.-% Einheiten umfasst, die von (Meth)acrylaten abgeleitet sind. Bevorzugt sind hierbei Ester der (Meth)acrylsäure, deren Alkoholrest vorzugsweise 1 bis 30 Kohlenstoffatome, besonders bevorzugt 1 bis 20 Kohlenstoffatome und ganz besonders bevorzugt 1 bis 10 Kohlenstoffatome umfasst. Hierzu gehören insbesondere (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat und Pentyl(meth)acrylat, Hexyl(meth)acrylat.

Gemäß einer besonderen Ausgestaltung der vorliegenden Erfindung kann zur Herstellung des Kerns eine Mischung eingesetzt werden, die Methacrylate und Acrylate umfasst. So können insbesondere Mischungen von Methylmethacrylat und Acrylaten mit 2 bis 6 Kohlenstoffen, wie Ethylacrylat, Butylacrylat und Hexylacrylat verwendet werden.

Darüber hinaus können die Polymere des Kerns die zuvor dargelegten Comonomere umfassen. Gemäß einer bevorzugten Abwandlung kann der Kern vernetzt sein. Diese Vernetzung kann durch die Verwendung von Monomeren mit zwei, drei oder mehr radikalisch polymerisierbaren Doppelbindungen erzielt werden.

Die äußerste Schale des Kern-Schale-Polymers kann bevorzugt 15 bis 28 Gew.-% Einheiten umfasst, die von (Meth)acrylaten abgeleitet sind, die im Alkylrest mindestens eine Doppelbindung und 8 bis 40 Kohlenstoffatome aufweisen.

Gemäß einem besonderen Aspekt kann der Kern vorzugsweise eine Glasübergangstemperatur im Bereich von -30 bis 200 °C, besonders bevorzugt im Bereich von -20 bis 150°C aufweisen. Die Schale, die vorzugsweise durch das (Meth)acrylat-Segment des Polymerisats gebildet wird, kann vorzugsweise eine Glasübergangstemperatur im Bereich von -30 °C bis 70°C besonders bevorzugt im Bereich von -20 bis 40°C und ganz besonders bevorzugt im Bereich von 0 bis 25 °C aufweisen. Gemäß einem besonderen Aspekt der vorliegenden Erfindung kann die Glasübergangstemperatur des Kerns größer sein als die Glasübergangstemperatur der Schale. Zweckmäßig kann die Glasübergangstemperatur des Kerns mindestens 10°C, bevorzugt mindestens 20°C oberhalb der Glasübergangstemperatur der Schale liegen.

Die Iodzahl des erfindungsgemäß einzusetzenden Polymerisats liegt vorzugsweise im Bereich von 1 bis 150 g Iod pro 100 g Polymerisat, besonders bevorzugt im Bereich von 2 bis 100 g Iod pro 100 g Polymerisat und ganz besonders bevorzugt 5 bis 40 g Iod pro 100 g Polymerisat, gemessen gemäß DIN 53241-1. Die Iodzahl kann insbesondere anhand einer erfindungsgemäßen Dispersion gemessen werden.

Zweckmäßig kann das Polymerisat mit mindestens einem (Meth)acrylat-Segment eine Säurezahl im Bereich von 0,1 bis 40 mg KOH/g, bevorzugt 1 bis 20 mg KOH/g und ganz besonders bevorzugt im Bereich von 2 bis 10 mg KOH/g aufweisen. Die Säurezahl kann gemäß DIN EN ISO 2114 anhand einer Dispersion bestimmt werden.

Die Hydroxyzahl des erfindungsgemäß einzusetzenden Polymerisats kann vorzugsweise im Bereich von 0 bis 200 mg KOH/g, besonders bevorzugt 1 bis 100 mg KOH/g und ganz besonders bevorzugt im Bereich von 3 bis 50 mg KOH/g liegen. Die Hydroxyzahl kann gemäß ASTM E222 anhand einer Dispersion bestimmt werden.

Die zuvor dargelegten Polymerisate auf Basis von (Meth)acrylaten können auf bekannte Weise, beispielsweise durch Lösungs-, Substanz oder Emulsionspolymerisation hergestellt werden, wobei die Herstellung vorzugsweise über Emulsionspolymerisation erfolgt, wobei diese Verfahren unter anderem in Ullmanns's Encyclopedia of Industrial Chemistry, Fifth Edition dargelegt sind.

Zur Herstellung der Polymerisate über eine Emulsionspolymerisation wird im Allgemeinen eine wässrige Phase hergestellt, die neben Wasser übliche Additive, insbesondere Emulgatoren und Schutzkolloide zur Stabilisierung der Emulsion enthalten kann.

Zu dieser wässrigen Phase werden anschließend Monomere hinzugegeben und in der wässrigen Phase polymerisiert. Bei Herstellung homogener Polymerteilchen kann hierbei eine Monomermischung über ein Zeitintervall kontinuierlich oder chargenweise zugegeben werden.

Das Dispergieren der Monomer-haltigen Phase in der wässrigen Phase kann mit bekannten Mitteln erfolgen. Hierzu gehören insbesondere mechanische Verfahren sowie die Anwendung von Ultraschall.

Die Monomermischung zur Herstellung des (Meth)acrylat-Segments der erfindungsgemäß einzusetzenden Polymerisate umfasst vorzugsweise 1 bis 30 Gew.-% (Meth)acrylate, die im Alkylrest mindestens eine Doppelbindung und 8 bis 40 Kohlenstoffatome aufweisen,

0,1 bis 10 Gew.-% Säuregruppen-haltige Monomere und

50 bis 98,9 Gew.-% (Meth)acrylate mit 1 bis 6 Kohlenstoffen im Alkylrest.

Besonders bevorzugt weist die Monomermischung 1 bis 5 Gew.-% Säuregruppen-haltige Monomere auf.

Bei der Herstellung von homogenen Emulsionspolymerisaten kann vorzugsweise eine Monomermischung eingesetzt werden, die 10 bis 20 Gew.-% (Meth)acrylate, die im Alkylrest mindestens eine Doppelbindung und 8 bis 40 Kohlenstoffatome aufweisen, umfasst.

Bei Herstellung von Kern-Schale-Polymeren kann die Zusammensetzung der Monomermischung schrittweise geändert werden, wobei vor Änderung der Zusammensetzung die Polymerisation vorzugsweise bis zu einem Umsatz von mindestens 80 Gew.-%, besonders bevorzugt mindestens 95 Gew.-%, jeweils bezogen auf das Gesamtgewicht der eingesetzten Monomermischung, polymerisiert wird. Kern-Schale-Polymer steht hier für ein Polymerisat, das durch eine zwei- oder mehrstufige Emulsionspolymerisation hergestellt wurde, ohne dass der Kern-Schale-Aufbau beispielsweise

elektronenmikroskopisch gezeigt wurde. Die Verfolgung des Reaktionsfortschrittes der Polymerisation in jeden Schritt kann auf bekannte Weise, beispielsweise gravimetrisch oder mittels Gaschromatographie erfolgen.

Die Monomermischung zur Herstellung des Kerns umfasst vorzugsweise 50 bis 100 Gew.-% (Meth)acrylate, wobei besonders bevorzugt eine Mischung von Acrylaten und Methacrylaten eingesetzt wird. Nach der Herstellung des Kerns kann auf diesen vorzugsweise eine Monomermischung aufgepfropft oder auf den Kern polymerisiert werden, die 15 bis 28 Gew.-% (Meth)acrylate, die im Alkylrest mindestens eine Doppelbindung und 8 bis 40 Kohlenstoffatome aufweisen, umfasst.

Die Emulsionspolymerisation wird vorzugsweise bei einer Temperatur im Bereich von 0 bis 120 °C, besonders bevorzugt im Bereich von 30 bis 100 °C durchgeführt. Dabei haben sich Polymersiationstemperaturen im Bereich von größer 60 bis kleiner 90 °C, zweckmäßigerweise im Bereich von größer 70 bis kleiner 85 °C, vorzugsweise im Bereich von größer 75 bis kleiner 85 °C, als ganz besonders günstig erwiesen.

Die Initiierung der Polymerisation erfolgt mit den für die Emulsionspolymerisation gebräuchlichen Initiatoren. Geeignete organische Initiatoren sind beispielsweise Hydroperoxide, wie tert.-Butyl-Hydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Ammonium, Natrium- und Kaliumperoxodisulfat. Geeignete Redox-Initiatorsysteme sind beispielsweise Kombinationen von tertiären Aminen mit Peroxiden oder Natriumdisulfit und Alkalimetall- und die Ammoniumsalze der Peroxodischwefelsäure, insbesondere Natrium-und Kaliumperoxodisulfat. Weitere Details können der Fachliteratur, insbesondere H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978 entnommen werden. Im Rahmen der vorliegenden Erfindung ist der Einsatz von organischen und/oder anorganischen Initiatoren besonders bevorzugt.

Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt. Man kann auch bevorzugt die Polymerisation mit einem Gemisch verschiedener Polymerisationsinitiatoren unterschiedlicher Halbwertzeit durchführen, um den Radikalstrom im Verlauf der Polymerisation sowie bei verschiedenen Polymerisationstemperaturen konstant zu halten.

Die Stabilisierung des Ansatzes erfolgt vorzugsweise mittels Emulgatoren und/oder Schutzkolloiden. Bevorzugt wird die Dispersion durch Emulgatoren stabilisiert, um eine niedrige Dispersionsviskosität zu erhalten. Die Gesamtmenge an Emulgator beträgt vorzugsweise 0,1 bis 15 Gew.-%, insbesondere 1 bis 10 Gew.-% und besonders bevorzugt 2 bis 5 Gew.-%, bezogen auf das Gesamtgewicht der eingesetzten Monomere. Gemäß einem besonderen Aspekt der vorliegenden Erfindung kann ein Teil der Emulgatoren während der Polymerisation zugegeben werden.

Besonders geeignete Emulgatoren sind anionische oder nichtionische Emulgatoren oder deren Mischungen, insbesondere

- Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;
- Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;
- Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;
- Alkylpolyglykolether, vorzugsweise mit 8 bis 20 Kohlenstoffatomen im Alkylrest und 8 bis 40 Ethylenoxideinheiten;
- Alkylarylpolyglykolether, vorzugsweise mit 8 bis 20 Kohlenstoffatomen im Alkyl- bzw. Alkylarylrest und 8 bis 40 Ethylenoxideinheiten;
- Ethylenoxid/Propylenoxid-Copolymere, vorzugsweise Blockcopolymere, günstigerweise mit 8 bis 40 Ethylenoxid- bzw. Propylenoxideinheiten.

Zu den besonders bevorzugten anionische Emulgatoren zählen insbesondere Fettalkoholethersulfate, Diisooctylsulfosuccinat, Laurylsulfat, C15-Paraffinsulfonat, wobei diese Verbindungen im Allgemeinen als Alkalimetallsalz, insbesondere als Natriumsalz eingesetzt werden können. Diese Verbindungen können insbesondere unter den Handelsbezeichnungen Disponil® FES 32, Aerosol® OT 75, Texapon® K1296 und Statexan® K1 von den Firmen Cognis GmbH, Cytec Industries, Inc. und Bayer AG kommerziell erhalten werden.

Zweckmäßige nichtionische Emulgatoren sind unter anderem tert-Octylphenolethoxylat mit 30 Ethylenoxideinheiten und Fettalkoholpolyethylenglykolether, die bevorzugt 8 bis 20 Kohlenstoffatome im Alkylrest und 8 bis 40 Ethylenoxideinheiten aufweisen. Diese Emulgatoren sind unter den Handelsbezeichnungen Triton® X 305 (Fluka), Tergitol® 15-S-7 (Sigma-Aldrich Co.), Marlipal® 1618/25 (Sasol Germany) und Marlipal® O 13/400 (Sasol Germany) kommerziell erhältlich.

Bevorzugt können Gemische aus anionischem Emulgator und nichtionischen Emulgator eingesetzt werden. Zweckmäßig kann das Gewichtsverhältnis von anionischem Emulgator zu nichtionischem Emulgator im Bereich von 20:1 bis 1:20, bevorzugt 2:1 bis 1:10 und besonders bevorzugt 1:1 bis 1:5 liegen. Dabei haben sich Gemische, die ein Sulfat, insbesondere ein Fettalkoholethersulfat, ein Laurylsulfat, oder ein Sulfonat, insbesondere ein Diisooctylsulfosuccinat oder ein Paraffinsulfonat als anionischen Emulgator und ein Alkylphenolethoxylat oder ein Fettalkoholpolyethylenglykolether, die jeweils bevorzugt 8 bis 20 Kohlenstoffatome im Alkylrest und 8 bis 40 Ethylenoxideinheiten aufweisen, als nichtionischem Emulgator ganz besonders bewährt.

Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrol-Maleinsäure- und Vinylethermaleinsäure-Copolymere. Falls Schutzkolloide eingesetzt werden, erfolgt dies vorzugsweise in einer Menge von 0,01 bis 1,0 Gew.-%, bezogen auf die Gesamtmenge der Monomere. Die Schutzkolloide können vor dem Start der Polymerisation vorgelegt oder zudosiert werden. Der Initiator kann vorgelegt oder zudosiert werden. Weiterhin ist es auch möglich, einen Teil des Initiators vorzulegen und den Rest zuzudosieren.

Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durchgeführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt werden die Reste an Emulgator und an Monomer, welche nicht vorgelegt wurden, nach dem Start der Polymerisation getrennt voneinander zudosiert. Vorzugsweise kann mit der Dosierung 15 bis 35 Minuten nach dem Start der Polymerisation begonnen werden.

Polymerisate, die mindestens ein (Meth)acrylat-Segment aufweisen, mit einem hohen Anteil an unlöslichen Polymeren können auf die zuvor dargelegte Weise erhalten werden, wobei die Reaktionsparameter, um ein hohes Molekulargewicht zu erhalten, bekannt sind. So kann hierbei insbesondere auf die Verwendung von Molekulargewichtsreglern verzichtet werden.

Die Einstellung der Teilchenradien des Polymerisats kann unter anderem über den Anteil an Emulgatoren beeinflusst werden. Je höher dieser Anteil, insbesondere zu Beginn der Polymerisation, desto kleinere Partikel werden erhalten.

Zur Herstellung der erfindungsgemäßen wässrigen Dispersionen kann ein wässriges Alkyd-Harz mit dem zuvor dargelegten Polymerisat gemischt werden.

Die Gewichtsanteile von Alkyd-Harz und Polymerisat auf Basis von (Meth)acrylaten kann in einem weiten Bereich liegen, wobei dieses im Allgemeinen an das gewünschte Eigenschaftsprofil angepasst werden kann. Vorzugsweise liegt das Gewichtsverhältnis von Alkyd-Harz zu Polymerisat auf Basis von (Meth)acrylaten im Bereich von 20:1 bis 1:20, besonders bevorzugt 5:1 bis 1:5 und ganz besonders bevorzugt 3:1 bis 1:3, bezogen auf das Trockengewicht der jeweiligen Komponenten.

Die wässrigen Dispersionen, die durch das erfindungsgemäße Verfahren erhalten werden, können als Beschichtungsmittel eingesetzt werden. Bevorzugt weisen die wässrigen Dispersionen einen Feststoffgehalt im Bereich von 10 bis 70 Gew.-%, besonders bevorzugt 20 bis 60 Gew.-% auf.

Zur Herstellung einer erfindungsgemäßen Dispersion kann vorzugsweise eine Polymerisat-Dispersion eingesetzt werden, die eine dynamische Viskosität im Bereich von 0,1 bis 180 mPas, bevorzugt 1 bis 80 mPas und ganz besonders bevorzugt 5 bis 20 mPas aufweist, gemessen gemäß DIN EN ISO 2555 bei 25°C (Brookfield).

Neben Wasser und den zuvor dargelegten Alkyd-Harzen und Polymerisaten auf Basis von (Meth)acrylaten können die erfindungsgemäßen Dispersionen Additive oder weitere Komponenten enthalten, um die Eigenschaften des Beschichtungsmittels an spezifische Anforderungen anzupassen. Zu diesen Zusatzstoffen gehören insbesondere Trocknungshilfsmittel, so genannte Sikkative, Fließverbesserer, Pigmente und Farbstoffe.

Besonders bevorzugt können Sikkative den wässrigen Dispersionen hinzugefügt werden. Hierzu gehören insbesondere organometallische Verbindungen, beispielsweise Metallseifen von Übergangsmetallen, wie beispielsweise Cobalt, Mangan, Blei, Zirkonium; Alkali- oder Erdalkalimetallen, wie beispielsweise Lithium, Kalium und Calcium. Exemplarisch sei beispielsweise Cobaltnaphthalat und Cobaltacetat erwähnt. Die Sikkative können einzeln oder als Mischung eingesetzt werden, wobei insbesondere Mischungen, die Cobalt-, Zirkonium- und Lithiumsalze enthalten, besonders bevorzugt sind.

Vorzugsweise weisen die erfindungsgemäßen Beschichtungsmittel eine Mindest-Filmbildungs-Temperatur von höchstens 50°C, besonders bevorzugt höchstens 35°C und ganz besonders bevorzugt höchstens 25°C auf, die gemäß DIN ISO 2115 gemessen werden kann.

Gemäß einem bevorzugten Aspekt der vorliegenden Erfindung kann eine erfindungsgemäße wässrige Dispersion eine Iodzahl nach DIN 53241- von mindestens 1 g Iod/100 g, vorzugsweise von mindestens 10 g Iod/100 g, besonders bevorzugt von mindestens 15 g Iod/100 g aufweisen. Gemäß einem besonderen Aspekt der vorliegenden Erfindung

kann die Iodzahl der wässrigen Dispersion im Bereich von 2 bis 100 g Iod pro 100 g wässriger Dispersion, besonders bevorzugt 15 bis 50 g Iod pro 100 g wässriger Dispersion liegen. Die Iodzahl kann anhand einer Dispersion bestimmt werden, wobei sich der Wert auf den Feststoffgehalt bezieht.

Zweckmäßig kann die wässrige Dispersion eine Säurezahl im Bereich von 0,1 bis 100 mg KOH/g, bevorzugt 1 bis 40 mg KOH/g und ganz besonders bevorzugt im Bereich von 2 bis 10 mg KOH/g aufweisen. Die Säurezahl kann gemäß DIN EN ISO 2114 anhand einer Dispersion bestimmt werden, wobei sich der Wert auf den Feststoffgehalt bezieht.

Die Hydroxyzahl einer erfindungsgemäßen wässrigen Dispersion kann vorzugsweise im Bereich von 0 bis 400 mg KOH/g, besonders bevorzugt 1 bis 200 mg KOH/g und ganz besonders bevorzugt im Bereich von 3 bis 150 mg KOH/g liegen. Die Hydroxyzahl kann gemäß ASTM E222 anhand einer Dispersion bestimmt werden, wobei sich der Wert auf den Feststoffgehalt bezieht.

Die wässrigen Dispersionen der vorliegenden Erfindung können insbesondere als Beschichtungsmittel oder als Zusatzstoff für eingesetzt werden. Hierzu gehören insbesondere Lacke, Imprägniermittel, Klebstoffe und/oder Grundierungen. Besonders bevorzugt können die wässrigen Dispersionen zur Herstellung von Lacken oder Imprägniermitteln für Anwendungen auf Holz und/oder Metall dienen.

Die aus den erfindungsgemäßen Beschichtungsmitteln erhältlichen Beschichtungen zeigen eine hohe Lösungsmittelbeständigkeit, wobei insbesondere nur geringe Anteile durch Lösungsmittel aus der Beschichtung gelöst werden. Bevorzugte Beschichtungen zeigen insbesondere gegenüber Methylisobutylketon (MIBK) eine hohe Beständigkeit. So beträgt der Gewichtsverlust nach einer Behandlung mit MIBK vorzugsweise höchstens 50 Gew.-%, bevorzugt höchstens 35 Gew.-%. Die Aufnahme an MIBK beträgt vorzugsweise höchstens 300 Gew.-%, besonders bevorzugt höchstens 250 Gew.-%, bezogen auf das Gewicht der eingesetzten Beschichtung. Diese Werte werden bei einer Temperatur von ca. 25°C und einer Einwirkzeit von mindestens 4 Stunden gemessen, wobei eine vollständig getrocknete Beschichtung vermessen wird. Hierbei findet die Trocknung in Gegenwart von Sauerstoff, beispielsweise Luft statt, um eine Vernetzung zu ermöglichen.

Die Beschichtungen, die aus den erfindungsgemäßen Beschichtungsmittel erhalten werden, zeigen eine hohe mechanische Beständigkeit. Bevorzugt beträgt die Pendelhärte mindestens 20 s, vorzugsweise mindestens 25 s, gemessen gemäß DIN ISO 1522.

Nachfolgend soll die vorliegende Erfindung anhand eines Beispiels näher erläutert werden, ohne dass hierdurch eine Beschränkung erfolgen soll.

Beispiel 1

Zunächst wurden in einem 2 l PE-Becherglas 180 g Butylacrylat (BA), 156 g Methylmethacrylat (MMA), 60 g Methacryloyloxy-2-hydroxypropyl-linolsäureester, 4 g Methacrylsäure (MAS), 1,2 g Ammoniumperoxodisulfat (APS), 12,0 g Disponil FES 32 (30 %ig) und 359,18 g Wasser mittels Ultra-Turrax 3 Minuten bei 4000 UpM emulgiert. Der Methacryloyloxy-2-hydroxypropyl-linolsäureester wurde durch Reaktion von Linolsäure mit Glycidylmethacrylat erhalten.

In einem 2 l Glasreaktor, der mit einem Wasserbad temperiert werden konnte und mit einem Blattrührer ausgestattet war, wurden 230 g Wasser und 0,3 g Disponil FES 32 (30 %ig) vorgelegt, auf 80°C erhitzt und mit 0,3 g Ammoniumperoxodisulfat (APS) gelöst in 10 g Wasser versetzt. 5 Minuten nach der APS-Zugabe wurde hierzu die zuvor hergestellte Emulsion innerhalb 240 Minuten (Intervall: 3 Minuten Zulauf, 4 Minuten Pause, 237 Minuten Restzulauf) zudosiert.

Nach Zulaufende wurde 1 Std. bei 80°C nachgerührt. Danach wurde auf Raumtemperatur abgekühlt und die Dispersion über VA-Siebgewebe mit 0,09 mm Maschenweite abfiltriert.

Die hergestellte Emulsion hatte einen Feststoffgehalt von 40 $\pm$ 1 %, einen pH-Wert von 2,6, eine Viskosität von 17 m Pas und einen $r_{N5}$-Wert von 75 nm.

117,15 g der zuvor hergestellten wässrigen Emulsion wurden mit 33,7 g eines PU-Alkydharzes (kommerziell von der Fa. Worlée erhältlich unter der Bezeichnung Worlée E150W) gemischt.

Die Eigenschaften des so erhaltenen Beschichtungsmittels wurden anhand von unterschiedlichen Verfahren untersucht. Hierzu wurden an getrockneten Filmen wurden Versuche zur Lösungsmittelbeständigkeit, der Wasseraufnahme und der Kratzfestigkeit durchgeführt.

Die Bestimmung der Lösungsmittelbeständigkeit erfolgte unter Verwendung von Methylisobutylketon (MIBK), wobei eine Probe mit MIBK bei Raumtemperatur 4 Stunden gequollen wurde. Anschließend wurde die Probe aus dem Lösungsmittel genommen und überschüssiges Lösungsmittel entfernt. Anschließend wurde die Probe 1 Stunde bei ca. 140°C getrocknet. Aus dem Gewichtsverlust errechnet sich der durch das Lösungsmittel entfernte Anteil der Probe. Die in Tabelle 1 dargelegten Werte beziehen sich auf das Gewicht der Beschichtung nach der Behandlung mit MIBK, hierin auch als "wahre Quellung" bezeichnet. Die Werte der Quellung in MIBK, die sich auf das Gewicht der eingesetzten Beschichtung beziehen sind geringer.

Zur Bestimmung der Wasseraufnahme kann ein Probekörper aus unbehandeltem massivem Kiefernholz (Maße: 45-50mmx45-50mmx17mm) eingesetzt werden. Der Probekörper wurde mit einer Lackschicht versehen und bei

Raumtemperatur in Wasser gegeben, so dass nur die beschichtete Fläche in Kontakt mit Wasser stand. Aus der Gewichtszunahme des Probekörpers errechnet sich die Wasseraufnahme.

Die Kratzfestigkeit wurde mit dem Bleistifthärtetest und mit dem Pendeltest untersucht. Weiterhin wurde ein Scheuertest gemäß ASTM D 4752 mit Aceton und Reinigungsbenzin durchgeführt. Die erhaltenen Ergebnisse sind in Tabelle 1 aufgeführt.

Beispiel 2

Das Beispiel 1 wurde im Wesentlichen wiederholt, wobei jedoch 117,15 g einer wässrigen Emulsion eingesetzt wurde, die mit Methacryloyloxy-2-hydroxypropyl-ölsäureester anstelle Methacryloyloxy-2-hydroxypropyl-linolsäureester erhalten wurde. Diese Emulsion wurde mit 33,7 g eines PU-Alkydharzes (kommerziell von der Fa. Worlée erhältlich unter der Bezeichnung Worlée E150W) gemischt. Die mit diesem Beschichtungsmittel erhaltenen Ergebnisse sind in Tabelle 1 aufgeführt.

Beispiel 3

Das Beispiel 1 wurde im Wesentlichen wiederholt, wobei jedoch 117,15 g einer wässrigen Emulsion eingesetzt wurde, die mit Linolyl-methacrylat anstelle Methacryloyloxy-2-hydroxypropyl-linolsäureester erhalten wurde. Diese Emulsion wurde mit 33,7 g eines PU-Alkydharzes (kommerziell von der Fa. Worlée erhältlich unter der Bezeichnung Worlée E150W) gemischt. Linolyl-methacrylat wurde durch Umesterung von Linolalkohol mit Methylmethacrylat erhalten (vgl. F.-B. Chen, G. Bufkin, "Crosslinkable Emulsion Polymers by Autooxidation II", Journal of Applied Polymer Science, Vol. 30, 4551 -4570 (1985). Die mit diesem Beschichtungsmittel erhaltenen Ergebnisse sind in Tabelle 1 aufgeführt.

Beispiel 4

Das Beispiel 1 wurde im Wesentlichen wiederholt, wobei jedoch 66,29 g der in Beispiel 1 hergestellten wässrigen Dispersion mit 57,2 g eines Polyurethan-Alkyd-Harzes (kommerziell von der Fa. Worlée erhältlich unter der Bezeichnung E150W) gemischt wurden. An getrockneten Filmen wurden Versuche zur Lösungsmittelbeständigkeit, der Wasseraufnahme und der Kratzfestigkeit durchgeführt. Die erhaltenen Ergebnisse sind in Tabelle 1 aufgeführt.

Vergleichsbeispiel 1

In einem weiteren Versuch wurde das in Beispiel 1 verwendete Alkyd-Harz ohne Beimischung von dem zuvor beschriebenen Polymerisat auf Basis von (Meth)acrylaten untersucht. An getrockneten Filmen wurden Versuche zur Lösungsmittelbeständigkeit, der Wasseraufnahme und der Kratzfestigkeit durchgeführt. Weiterhin wurde ein Scheuertest mit Aceton und Reinigungsbenzin durchgeführt. Die erhaltenen Ergebnisse sind in Tabelle 1 aufgeführt.

Vergleichsbeispiel 2

Zunächst wurden in einem 2 l PE-Becherglas 216 g Butylacrylat (BA), 180 g Methylmethacrylat (MMA), 4 g Methacrylsäure (MAS), 1,2 g Ammoniumperoxodisulfat (APS), 12,0 g Disponil FES 32 (30 %ig) und 359,18 g Wasser mittels Ultra-Turrax 3 Minuten bei 4000 UpM emulgiert.

In einem 2 l Glasreaktor, der mit einem Wasserbad temperiert werden konnte und mit einem Blattrührer ausgestattet war, wurden 230 g Wasser und 0,3 g Disponil FES 32 (30 %ig) vorgelegt, auf 80°C erhitzt und mit 0,3 g Ammoniumperoxodisulfat (APS) gelöst in 10 g Wasser versetzt. 5 Minuten nach der APS-Zugabe wurde hierzu die zuvor hergestellte Emulsion innerhalb 240 Minuten (Intervall: 3 Minuten Zulauf, 4 Minuten Pause, 237 Minuten Restzulauf) zudosiert.

Nach Zulaufende wurde 1 Std. bei 80°C nachgerührt. Danach wurde auf Raumtemperatur abgekühlt und die Dispersion über VA-Siebgewebe mit 0,09 mm Maschenweite abfiltriert.

An getrockneten Filmen wurden Versuche zur Lösungsmittelbeständigkeit, der Wasseraufnahme und der Kratzfestigkeit durchgeführt.

Tabelle 1: Ergebnisse der Eigenschaftsuntersuchungen

| | Beispiel 1 | Beispiel 2 | Beispiel 3 | Beispiel 4 | Vergleichs-beispiel 1 | Vergleichs-beispiel 2 |
|---|---|---|---|---|---|---|
| Pendelhärte [s] | 53,2 | 49,7 | 41,8 | 25,2 | 13,3 | 7 |

(fortgesetzt)

| | Beispiel 1 | Beispiel 2 | Beispiel 3 | Beispiel 4 | Vergleichs-beispiel 1 | Vergleichs-beispiel 2 |
|---|---|---|---|---|---|---|
| Bleistifthärte | 3H | 3H | 2H | 3H | < 6B | - |
| wahre Quellung in MIBK [%] | 306 | 438 | 522 | 374 | 391 | gelöst |
| Gewichtsverlust durch MIBK [%] | 27,6 | 33,8 | 37,9 | 30,1 | 47,7 | gelöst |
| Wasseraufnahme 6h (Blindwert 38,7%) [%] | 9,9 | 14,6 | 13,5 | 12,1 | 14,0 | - |
| Scheuertest mit Aceton [Anzahl der Hübe zur Ablösung des Films] | 25 | | | | 27 | |
| Scheuertest mit > Reinigungsbenzin [Anzahl der Hübe zur Ablösung des Films] | 50 | | | | 21 | |

Beispiel 5

Das Beispiel 1 wurde im Wesentlichen wiederholt, wobei jedoch 117,15 g der in Beispiel 1 hergestellten wässrigen Dispersion mit 33,7 g einer urethanmodifizierten Cosolvens-freie Kurzölalkydemulsion gemischt wurden. An getrockneten Filmen wurden Versuche zur Lösungsmittelbeständigkeit, der Wasseraufnahme und der Kratzfestigkeit durchgeführt.

Hierbei wurde zusätzlich ein Möbeltest gemäß DIN 68861-1 durchgeführt.

Die erhaltenen Ergebnisse sind in Tabelle 2 aufgeführt.

Beispiel 6

Das Beispiel 5 wurde im Wesentlichen wiederholt, wobei jedoch 66,29 g der in Beispiel 1 hergestellten wässrigen Dispersion mit 57,2 g einer urethanmodifizierten Cosolvens-freie Kurzölalkydemulsion gemischt wurden. An getrockneten Filmen wurden Versuche zur Lösungsmittelbeständigkeit, der Wasseraufnahme und der Kratzfestigkeit durchgeführt. Die erhaltenen Ergebnisse sind in Tabelle 2 aufgeführt.

Beispiel 7

Das Beispiel 5 wurde im Wesentlichen wiederholt, wobei jedoch 33,7 g der in Beispiel 1 hergestellten wässrigen Dispersion mit 117,15 g einer urethanmodifizierten Cosolvens-freie Kurzölalkydemulsion gemischt wurden. An getrockneten Filmen wurden Versuche zur Lösungsmittelbeständigkeit, der Wasseraufnahme und der Kratzfestigkeit durchgeführt. Die erhaltenen Ergebnisse sind in Tabelle 2 aufgeführt.

Vergleichsbeispiel 3

In einem weiteren Versuch wurde das in Beispiel 5 verwendete Alkyd-Harz ohne Beimischung von dem zuvor beschriebenen Polymerisat auf Basis von (Meth)acrylaten untersucht. An getrockneten Filmen wurden Versuche zur Lösungsmittelbeständigkeit, der Wasseraufnahme und der Kratzfestigkeit durchgeführt. Die erhaltenen Ergebnisse sind in Tabelle 2 aufgeführt.

Tabelle 2: Ergebnisse der Eigenschaftsuntersuchungen

| | Beispiel 5 | Beispiel 6 | Beispiel 7 | Vergleichsbeispiel 3 |
|---|---|---|---|---|
| Pendelhärte [s] | 14,2 | 15,1 | 18,2 | 12,6 |
| wahre Quellung in MIBK [%] | 368 | 403 | 241 | 1024 |
| wahre Quellung in Ethanol [%] | 123 | 154 | 170 | 281 |
| Möbeltest DIN 68861-1 / 48% EtOH | 5 | 5 | 5 | 3 |
| Möbeltest DIN 68861-1 / 15% HOAc | 5 | 5 | 5 | 3 |

**Patentansprüche**

1. Wässrige Dispersion umfassend mindestens ein Alkyd-Harz und mindestens ein Polymerisat mit mindestens einem (Meth)acrylat-Segment, das

   1 bis 30 Gew.-% Einheiten, die von (Meth)acrylaten abgeleitet sind, die im Alkylrest mindestens eine Doppelbindung und 8 bis 40 Kohlenstoffatome aufweisen,
   0,1 bis 10 Gew.-% Einheiten, die von Säuregruppen-haltigen Monomeren abgeleitet sind, und
   50 bis 98,9 Gew.-% Einheiten, die von (Meth)acrylaten mit 1 bis 6 Kohlenstoffatomen im Alkylrest abgeleitet sind, jeweils bezogen auf das Gewicht des (Meth)acrylat-Segments, umfasst.

2. Wässrige Dispersion gemäß Anspruch 1, **dadurch gekennzeichnet, dass** das Alkyd-Harz durch Umsetzung eines mehrwertigen Alkohols mit einem mehrwertigen Isocyanat erhältlich ist.

3. Wässrige Dispersion gemäß Anspruch 1 oder 2, **dadurch gekennzeichnet, dass** das Alkyd-Harz Einheiten aufweist, die von aromatischen Dicarbonsäuren und/oder von Alkoholen mit drei oder mehr Hydroxygruppen abgeleitet sind.

4. Wässrige Dispersion gemäß mindestens einem der vorhergehenden Ansprüche, **dadurch gekennzeichnet, dass** das Alkyd-Harz Einheiten aufweist, die von Fettsäuren und/oder ungesättigten Fettsäuren mit 6 bis 30 Kohlenstoffatomen abgeleitet sind.

5. Wässrige Dispersion gemäß mindestens einem der vorhergehenden Ansprüche, **dadurch gekennzeichnet, dass** das Alkyd-Harz eine Iodzahl von mindestens 10 Iod g/100 g aufweist.

6. Wässrige Dispersion gemäß mindestens einem der vorhergehenden Ansprüche, **dadurch gekennzeichnet, dass** das Alkyd-Harz eine Säurezahl im Bereich von 0,1 bis 100 mg KOH und/oder eine Hydroxyzahl im Bereich von 1 bis 200 mg KOH pro g Alkyd-Harz aufweist.

7. Wässrige Dispersion gemäß mindestens einem der vorhergehenden Ansprüche, **dadurch gekennzeichnet, dass** das Alkyd-Harz ein Urethanalkyd-Harze ist, das durch Umsetzung von mehrwertigen Alkoholen A', modifizierten Fettsäuren B', Fettsäuren C' und mehrwertigen Isocyanaten D' erhältlich ist.

8. Wässrige Dispersion gemäß mindestens einem der vorhergehenden Ansprüche, **dadurch gekennzeichnet, dass** das Polymerisat mit mindestens einem (Meth)acrylat-Segment einen Teilchenradius von mindestens 50 nm aufweist.

9. Wässrige Dispersion gemäß mindestens einem der vorhergehenden Ansprüche, **dadurch gekennzeichnet, dass** die (Meth)acrylate, die im Alkylrest mindestens eine Doppelbindung und 8 bis 40 Kohlenstoffatome aufweisen, durch Umsetzung von mindestens einer ungesättigten Fettsäure mit mindestens einem (Meth)acrylat, das im Alkoholrest mindestens eine reaktive Gruppe aufweist, vorzugsweise ein Hydroxylalkyl(meth)acrylat oder ein (Meth)acrylat mit mindestens einer Epoxygruppe ist, besonders bevorzugt mit Glycidyl(meth)acrylat, erhältlich sind.

10. Wässrige Dispersion gemäß mindestens einem der vorhergehenden Ansprüche, **dadurch gekennzeichnet, dass** das Polymerisat mit mindestens einem (Meth)acrylat-Segment Einheiten umfasst, die von (Meth)acryloyloxy-2-hydroxypropyl-linolsäureester, (Meth)acryloyloxy-2-hydroxypropyl-linolensäureester und/oder (Meth)acryloyloxy-2-hydroxypropyl-ölsäureester abgeleitet sind.

**11.** Wässrige Dispersion gemäß Anspruch 10, **dadurch gekennzeichnet, dass** das Gewichtsverhältnis von Einheiten, die von (Meth)acryloyloxy-2-hydroxypropyl-linolsäureester abgeleitet sind, zu Einheiten, die von (Meth)acryloyloxy-2-hydroxypropyl-ölsäureester abgeleitet sind, größer oder gleich 1 ist.

**12.** Wässrige Dispersion gemäß Anspruch 10 oder 11, **dadurch gekennzeichnet, dass** das Polymerisat mit mindestens einem (Meth)acrylat-Segment mindestens 40 Gew.-% Einheiten, bevorzugt 45 Gew.-% bis 80 Gew.-% Einheiten, umfasst, die von (Meth)acryloyloxy-2-hydroxypropyl-linolsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

**13.** Wässrige Dispersion gemäß mindestens einem der Ansprüche 10 bis 12, **dadurch gekennzeichnet, dass** das Polymerisat mit mindestens einem (Meth)acrylat-Segment mindestens 10 Gew.-% Einheiten umfasst, bevorzugt 15 Gew.-% bis 45 Gew.-% Einheiten, die von (Meth)acryloyloxy-2-hydroxypropyl-ölsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

**14.** Wässrige Dispersion gemäß mindestens einem der vorhergehenden Ansprüche, **dadurch gekennzeichnet, dass** das Polymerisat mit mindestens einem (Meth)acrylat-Segment 2 bis 30 Gew.-% an Einheiten umfasst, die von Comonomeren abgeleitet sind, bezogen auf das Gewicht des (Meth)acrylat-Segments.

**15.** Wässrige Dispersion gemäß mindestens einem der vorhergehenden Ansprüche, **dadurch gekennzeichnet, dass** das Polymerisat mit mindestens einem (Meth)acrylat-Segment höchstens 30 Gew.-% an Einheiten umfasst, die von Styrol, substituierten Styrolen mit einem Alkylsubstituenten in der Seitenkette, substituierte Styrolen mit einem Alkylsubstitutenten am Ring und/oder halogenierten Styrolen abgeleitet sind, bezogen auf das Gewicht des (Meth) acrylat-Segments.

**16.** Wässrige Dispersion gemäß mindestens einem der vorhergehenden Ansprüche, **dadurch gekennzeichnet, dass** das Polymerisat mit mindestens einem (Meth)acrylat-Segment höchstens 10 Gew.-%, bevorzugt 0,1 bis 3 Gew.-% an Einheiten umfasst, die von (Meth)acrylaten abgeleitet sind, die durch Umsetzung von gesättigten Fettsäuren mit mindestens einem (Meth)acrylat, das im Alkoholrest reaktive Gruppen aufweist, erhältlich sind, bezogen auf das Gewicht des (Meth)acrylat-Segments.

**17.** Wässrige Dispersion gemäß Anspruch 16, **dadurch gekennzeichnet, dass** die gesättigten Fettsäuren 10 bis 26 Kohlenstoffatome aufweisen.

**18.** Wässrige Dispersion gemäß mindestens einem der Ansprüche 16 bis 17, **dadurch gekennzeichnet, dass** die (Meth)acrylaten durch Umsetzung von gesättigten Fettsäuren mit Glycidyl(meth)acrylat erhältlich sind.

**19.** Wässrige Dispersion gemäß mindestens einem der vorhergehenden Ansprüche, **dadurch gekennzeichnet, dass** 2 bis 60 Gew.-% des Polymerisats mit mindestens einem (Meth)acrylat-Segment in Tetrahydrofuran (THF) bei 20°C löslich sind.

**20.** Wässrige Dispersion gemäß mindestens einem der vorhergehenden Ansprüche, **dadurch gekennzeichnet, dass** das Polymerisat mit mindestens einem (Meth)acrylat-Segment einen Kern-Schale-Aufbau aufweist, bevorzugt mit einem Kern der 50 bis 100 Gew.-% Einheiten umfasst, die von (Meth)acrylaten abgeleitet sind.

**21.** Wässrige Dispersion gemäß Anspruch 20, **dadurch gekennzeichnet, dass** die Schale 15 bis 28 Gew.-% Einheiten umfasst, die von (Meth)acrylaten abgeleitet sind, die im Alkylrest mindestens eine Doppelbindung und 8 bis 40 Kohlenstoffatome aufweisen.

**22.** Wässrige Dispersion gemäß mindestens einem der vorhergehenden Ansprüche, **dadurch gekennzeichnet, dass** das Polymerisat mit mindestens einem (Meth)acrylat-Segment 10 bis 20 Gew.-% Einheiten umfasst, die von (Meth) acrylaten abgeleitet sind, die im Alkylrest mindestens eine Doppelbindung und 8 bis 40 Kohlenstoffatome aufweisen.

**23.** Wässrige Dispersion gemäß mindestens einem der vorhergehenden Ansprüche, **dadurch gekennzeichnet, dass** das Polymerisat mit mindestens einem (Meth)acrylat-Segment eine Iodzahl im Bereich von 5 bis 40 g/100 g Polymerisat aufweist.

**24.** Wässrige Dispersion gemäß mindestens einem der vorhergehenden Ansprüche, **dadurch gekennzeichnet, dass** die wässrige Dispersion eine lodzahl im Bereich von 2 bis 100 g/100 g Dispersion, bezogen auf den Feststoffgehalt, aufweist.

**25.** Wässrige Dispersion gemäß mindestens einem der vorhergehenden Ansprüche, **dadurch gekennzeichnet, dass** die wässrige Dispersion eine Säurezahl im Bereich von 0,1 bis 100 g/100 g Dispersion, bezogen auf den Feststoffgehalt, aufweist.

**26.** Wässrige Dispersion gemäß mindestens einem der vorhergehenden Ansprüche, **dadurch gekennzeichnet, dass** das Gewichtsverhältnis von Alkyd-Harz zu Polymerisat mit mindestens einem (Meth)acrylat-Segment im Bereich von 20:1 bis 1:20 liegt, bezogen auf das Trockengewicht der jeweiligen Komponenten.

**27.** Verfahren zur Herstellung von wässrigen Dispersionen gemäß mindestens einem die vorhergehenden Ansprüche, **dadurch gekennzeichnet, dass** man eine wässrige Dispersion eines Polymerisats mit mindestens einem (Meth) acrylat-Segment herstellt, vorzugsweise ein Emulsionspolymer, und mit einem Alkyd-Harz mischt.

**28.** Verfahren gemäß Anspruch 27, **dadurch gekennzeichnet, dass** das Polymerisat als wässrige Polymerisat-Dispersion mit dem Alkyd-Harz gemischt wird, wobei die wässrige Polymerisat-Dispersion eine dynamische Viskosität im Bereich von 1 bis 80 mPas, gemessen gemäβ DIN EN ISO 2555 bei 25°C (BROOKFIELD), aufweist.

## Claims

**1.** Aqueous dispersion comprising at least one alkyd resin and at least one addition polymer having at least one (meth) acrylate segment which comprises

1 % to 30% by weight of units derived from (meth)acrylates which in the alkyl radical have at least one double bond and 8 to 40 carbon atoms, 0.1 % to 10% by weight of units derived from monomers containing acid groups, and
50% to 98.9% by weight of units derived from (meth)acrylates having 1 to 6 carbon atoms in the alkyl radical, based in each case on the weight of the (meth)acrylate segment.

**2.** Aqueous dispersion according to Claim 1, **characterized in that** the alkyd resin is obtainable by reacting a polyhydric alcohol with a polyfunctional isocyanate.

**3.** Aqueous dispersion according to Claim 1 or 2, **characterized in that** the alkyd resin has units derived from aromatic dicarboxylic acids and/or from alcohols having three or more hydroxy groups.

**4.** Aqueous dispersion according to at least one of the preceding claims, **characterized in that** the alkyd resin has units derived from fatty acids and/or unsaturated fatty acids having 6 to 30 carbon atoms.

**5.** Aqueous dispersion according to at least one of the preceding claims, **characterized in that** the alkyd resin has an iodine number of at least 10 g iodine/100 g.

**6.** Aqueous dispersion according to at least one of the preceding claims, **characterized in that** the alkyd resin has an acid number in the range from 0.1 to 100 mg KOH and/or a hydroxy number in the range from 1 to 200 mg KOH per g alkyd resin.

**7.** Aqueous dispersion according to at least one of the preceding claims, **characterized in that** the alkyd resin is a urethane alkyd resin obtainable by reacting polyhydric alcohols A', modified fatty acids B', fatty acids C' and polyfunctional isocyanates D'.

**8.** Aqueous dispersion according to at least one of the preceding claims, **characterized in that** the addition polymer having at least one (meth)acrylate segment has a particle radius of at least 50 nm.

**9.** Aqueous dispersion according to at least one of the preceding claims, **characterized in that** the (meth)acrylates which in the alkyl radical have at least one double bond and 8 to 40 carbon atoms are obtainable by reacting at least one unsaturated fatty acid with at least one (meth)acrylate which has at least one reactive group in the alcohol

residue, preferably is a hydroxyalkyl (meth)acrylate or a (meth)acrylate having at least one epoxy group, particularly preferably with glycidyl (meth)acrylate.

**10.** Aqueous dispersion according to at least one of the preceding claims, **characterized in that** the addition polymer having at least one (meth)acrylate segment comprises units derived from (meth)acryloyloxy-2-hydroxypropyl-linoleic ester, (meth)acryloyloxy-2-hydroxypropyl-linolenic ester and/or (meth)acryloyloxy-2-hydroxypropyl-oleic ester.

**11.** Aqueous dispersion according to Claim 10, **characterized in that** the weight ratio of units derived from (meth) acryloyloxy-2-hydroxypropyl-linoleic ester to units derived from (meth)acryloyloxy-2-hydroxypropyl-oleic ester is greater than or equal to 1.

**12.** Aqueous dispersion according to Claim 10 or 11, **characterized in that** the addition polymer having at least one (meth)acrylate segment comprises at least 40% by weight of units, preferably 45% to 80% by weight of units, derived from (meth)acryloyloxy-2-hydroxypropyl-linoleic ester, based on the weight of the units derived from (meth)acrylates which in the alkyl radical have at least one double bond and 8 to 40 carbon atoms.

**13.** Aqueous dispersion according to at least one of Claims 10 to 12, **characterized in that** the addition polymer having at least one (meth)acrylate segment comprises at least 10% by weight of units, preferably 15% to 45% by weight of units, derived from (meth)acryloyloxy-2-hydroxypropyl-oleic ester, based on the weight of the units derived from (meth)acrylates which in the alkyl radical have at least one double bond and 8 to 40 carbon atoms.

**14.** Aqueous dispersion according to at least one of the preceding claims, **characterized in that** the addition polymer having at least one (meth)acrylate setment comprises 2% to 30% by weight of units derived from comonomers, based on the weight of the (meth)acrylate segment.

**15.** Aqueous dispersion according to at least one of the preceding claims, **characterized in that** the addition polymer having at least one (meth)acrylate segment comprises not more than 30% by weight of units derived from styrene, substituted styrenes having an alkyl substituent in the side chain, substituted styrenes having an alkyl substituent on the ring and/or halogenated styrenes, based on the weight of the (meth)acrylate segment.

**16.** Aqueous dispersion according to at least one of the preceding claims, **characterized in that** the addition polymer having at least one (meth)acrylate segment comprises not more than 10% by weight, preferably 0.1 % to 3% by weight of units, derived from (meth)acrylates which are obtainable by reacting saturated fatty acids with at least one (meth)acrylate which has reactive groups in the alcohol residue, based on the weight of the (meth)acrylate segment.

**17.** Aqueous dispersion according to Claim 16, **characterized in that** the saturated fatty acids have 10 to 26 carbon atoms.

**18.** Aqueous dispersion according to at least one of Claims 16 to 17, **characterized in that** the (meth)acrylates are obtainable by reacting saturated fatty acids with glycidyl (meth)acrylate.

**19.** Aqueous dispersion according to at least one of the preceding claims, **characterized in that** 2% to 60% by weight of the addition polymer having at least one (meth)acrylate segment are soluble in tetrahydrofuran (THF) at 20°C.

**20.** Aqueous dispersion according to at least one of the preceding claims, **characterized in that** the addition polymer having at least one (meth)acrylate segment has a core-shell structure, preferably having a core which comprises 50% to 100% by weight of units derived from (meth)acrylates.

**21.** Aqueous dispersion according to Claim 20, **characterized in that** the shell comprises 15% to 28% by weight of units derived from (meth)acrylates which in the alkyl radical have at least one double bond and 8 to 40 carbon atoms.

**22.** Aqueous dispersion according to at least one of the preceding claims, **characterized in that** the addition polymer having at least one (meth)acrylate segment comprises 10% to 20% by weight of units derived from (meth)acrylates which in the alkyl radical have at least one double bond and 8 to 40 carbon atoms.

**23.** Aqueous dispersion according to at least one of the preceding claims, **characterized in that** the addition polymer having at least one (meth)acrylate segment has an iodine number in the range from 5 to 40 g/100 g polymer.

**24.** Aqueous dispersion according to at least one of the preceding claims, **characterized in that** the aqueous dispersion has an iodine number in the range from 2 to 100 g/100 g dispersion, based on the solids content.

**25.** Aqueous dispersion according to at least one of the preceding claims, **characterized in that** the aqueous dispersion has an acid number in the range from 0.1 to 100 g/100 g dispersion, based on the solids content.

**26.** Aqueous dispersion according to at least one of the preceding claims, **characterized in that** the weight ratio of alkyd resin to addition polymer having at least one (meth)acrylate segment is in the range from 20:1 to 1:20, based on the dried weight of the respective components.

**27.** Process for preparing aqueous dispersions according to at least one of the preceding claims, **characterized in that** an aqueous dispersion of an addition polymer having at least one (meth)acrylate segment is prepared, preferably an emulsion polymer, and is mixed with an alkyd resin.

**28.** Process according to Claim 27, **characterized in that** the addition polymer is mixed in the form of an aqueous addition-polymer dispersion with the alkyd resin, the aqueous addition-polymer dispersion having a dynamic viscosity in the range from 1 to 80 mPas, measured in accordance with DIN EN ISO 2555 at 25°C (Brookfield).

## Revendications

**1.** Dispersion aqueuse comprenant au moins une résine alkyde et au moins un polymérisat comportant au moins un segment (méth)acrylate, qui comprend 1 à 30 % en poids de motifs qui sont dérivés de (méth)acrylates qui comportent dans le radical alkyle au moins une double liaison et de 8 à 40 atomes de carbone,
0,1 1 à 10 % en poids de motifs qui sont dérivés de monomères contenant des groupes acides, et
50 à 98,9 % en poids de motifs qui sont dérivés de (méth)acrylates ayant de 1 à 6 atomes de carbone dans le radical alkyle, chaque fois par rapport au poids total du segment (méth)acrylate.

**2.** Dispersion aqueuse selon la revendication 1, **caractérisée en ce que** la résine alkyde peut être obtenue par mise en réaction d'un alcool polyhydrique avec un isocyanate plurivalent.

**3.** Dispersion aqueuse selon la revendication 1 ou 2, **caractérisée en ce que** la résine alkyde comporte des motifs qui sont dérivés d'acides dicarboxyliques aromatiques et/ou d'alcools à trois ou plus de trois groupes hydroxy.

**4.** Dispersion aqueuse selon au moins l'une des revendications précédentes, **caractérisée en ce que** la résine alkyde comporte des motifs qui sont dérivés d'acides gras et/ou d'acides gras insaturés ayant de 6 à 30 atomes de carbone.

**5.** Dispersion aqueuse selon au moins l'une des revendications précédentes, **caractérisée en ce que** la résine alkyde présente un indice d'iode d'au moins 10 g d'iode/100 g.

**6.** Dispersion aqueuse selon au moins l'une des revendications précédentes, **caractérisée en ce que** la résine alkyde présente un indice d'acide dans la plage de 0,1 à 100 mg de KOH et/ou un indice de groupes hydroxy dans la plage de 1 à 200 mg de KOH par g de résine alkyde.

**7.** Dispersion aqueuse selon au moins l'une des revendications précédentes, **caractérisée en ce que** la résine alkyde est une résine uréthanne-alkyde qui peut être obtenue par mise en réaction d'alcools polyhydriques A', d'acides gras modifiés B', d'acides gras C' et d'isocyanates plurivalents D'.

**8.** Dispersion aqueuse selon au moins l'une des revendications précédentes, **caractérisée en ce que** le polymérisat comportant au moins un segment (méth)acrylate présente un rayon de particule d'au moins 50 nm.

**9.** Dispersion aqueuse selon au moins l'une des revendications précédentes, **caractérisée en ce que** les (méth) acrylates qui comportent dans le radical alkyle au moins une double liaison et de 8 à 40 atomes de carbone peuvent être obtenus par mise en réaction d' au moins un acide gras insaturé avec au moins un (méth)acrylate qui comporte dans le reste alcool au moins un groupe réactif, de préférence est un (méth)acrylate d'hydroxyalkyle ou un (méth) acrylate comportant au moins un groupe époxy, de façon particulièrement préférée avec du (méth)acrylate de glycidyle.

**10.** Dispersion aqueuse selon au moins l'une des revendications précédentes, **caractérisée en ce que** le polymérisat comportant au moins un segment (méth)acrylate comprend des motifs qui sont dérivés de linoléate de (méth) acryloyloxy-2-hydroxypropyle, de linolénate de (méth)acryloyloxy-2-hydroxypropyle et/ou d'oléate de (méth)acryloyloxy-2-hydroxypropyle.

**11.** Dispersion aqueuse selon la revendication 10, **caractérisée en ce** le rapport pondéral des motifs qui sont dérivés de linoléate de (méth)acryloyloxy-2-hydroxypropyle aux motifs qui sont dérivés d'oléate de (méth)acryloyloxy-2-hydroxypropyle est supérieur ou égal à 1.

**12.** Dispersion aqueuse selon la revendication 10 ou 11, **caractérisée en ce que** le polymérisat comportant au moins un segment (méth)acrylate comprend au moins 40 % en poids de motifs, de préférence de 45 % en poids à 80 % en poids de motifs, qui sont drivés de linoléate de (méth)acryloyloxy-2-hydroxypropyle, par rapport au poids des motifs qui sont dérivés de (méth)acrylates qui comportent dans le reste alkyle au moins une double liaison et de 8 à 40 atomes de carbone.

**13.** Dispersion aqueuse selon au moins l'une des revendications 10 à 12, **caractérisée en ce que** le polymérisat comportant au moins un segment (méth)acrylate comprend au moins 10 % en poids de motifs, de préférence de 15 % en poids à 45 % en poids de motifs, qui sont dérivés d'oléate de (méth)acryloyloxy-2-hydroxypropyle, par rapport au poids des motifs qui sont dérivés de (méth)acrylates qui comportent dans le reste alkyle au moins une double liaison et de 8 à 40 atomes de carbone.

**14.** Dispersion aqueuse selon au moins l'une des revendications précédentes, **caractérisée en ce que** le polymérisat comportant au moins un segment (méth)acrylate comprend de 2 à 30 % en poids de motifs qui sont dérivés de comonomères, par rapport au poids du segment (méth)acrylate.

**15.** Dispersion aqueuse selon au moins l'une des revendications précédentes, **caractérisée en ce que** le polymérisat comportant au moins un segment (méth)acrylate comprend au maximum 30 % en poids de motifs qui sont dérivés du styrène, de styrènes substitués comportant un substituant alkyle sur la chaîne latérale, de styrènes substitués comportant un substituant alkyle sur le noyau et/ou de styrènes halogénés, par rapport au poids du segment (méth) acrylate .

**16.** Dispersion aqueuse selon au moins l'une des revendications précédentes, **caractérisée en ce que** le polymérisat comportant au moins un segment (méth)acrylate comprend au maximum 10 % en poids, de préférence de 0,1 à 3 % en poids de motifs qui sont dérivés de (méth)acrylates qui peuvent être obtenus par mise en réaction d'acides gras saturés avec au moins un (méth)acrylate qui comporte dans le reste alcool des groupes réactifs, par rapport au poids du segment (méth)acrylate).

**17.** Dispersion aqueuse selon la revendication 16, **caractérisée en ce que** les acides gras saturés comportent de 10 à 26 atomes de carbone.

**18.** Dispersion aqueuse selon au moins l'une des revendications 16 et 17, **caractérisée en ce que** les (méth)acrylates peuvent être obtenus par mise en réaction d'acides gras saturés avec du (méth)acrylate de glycidyle.

**19.** Dispersion aqueuse selon au moins l'une des revendications précédentes, **caractérisée en ce que** 2 à 60 % en poids du polymérisat comportant au moins un segment (méth)acrylate sont solubles dans le tétrahydrofuranne (THF) à 20 °C.

**20.** Dispersion aqueuse selon au moins l'une des revendications précédentes, **caractérisée en ce que** le polymérisat comportant au moins un segment (méth)acrylate présente une structure noyau-enveloppe, de préférence avec un noyau qui comprend de 50 à 100 % en poids de motifs qui sont dérivés de (méth)acrylates.

**21.** Dispersion aqueuse selon la revendication 20, **caractérisée en ce que** l'enveloppe comprend de 15 à 28 % en poids de motifs qui sont dérivés de (méth)acrylates qui comportent dans le reste alkyle au moins une double liaison et de 8 à 40 atomes de carbone.

**22.** Dispersion aqueuse selon au moins l'une des revendications précédentes, **caractérisée en ce que** le polymérisat comportant au moins un segment (méth)acrylate comprend de 10 à 20 % en poids de motifs qui sont dérivés de (méth)acrylates qui comportent au moins une double liaison et de 8 à 40 atomes de carbone.

**23.** Dispersion aqueuse selon au moins l'une des revendications précédentes, **caractérisée en ce que** le polymérisat comportant au moins un segment (méth)acrylate présente un indice d'iode dans la plage de 5 à 40 g/100 g de polymérisat.

**24.** Dispersion aqueuse selon au moins l'une des revendications précédentes, **caractérisée en ce que** la dispersion aqueuse présente un indice d'iode dans la plage de 2 à 100 g/100 g de dispersion, sur la base de la teneur en matière solide.

**25.** Dispersion aqueuse selon au moins l'une des revendications précédentes, **caractérisée en ce que** la dispersion aqueuse présente un indice d'acide dans la plage de 0,1 à 100 g/100 g de dispersion, sur la base de la teneur en matière solide.

**26.** Dispersion aqueuse selon au moins l'une des revendications précédentes, **caractérisée en ce que** le rapport pondéral de la résine alkyde au polymérisat comportant au moins un segment (méth)acrylate se situe dans la plage allant de 20:1 à 1:20, sur la base du poids sec des composants respectifs.

**27.** Procédé pour la préparation de dispersions aqueuses selon au moins l'une des revendications précédentes, **caractérisé en ce qu'**on prépare une dispersion aqueuse d'un polymérisat comportant au moins un segment (méth) acrylate, de préférence un polymère en émulsion, et on la mélange avec une résine alkyde.

**28.** Procédé selon la revendication 27, **caractérisé en ce qu'**on mélange le polymérisat, sous forme de dispersion aqueuse de polymérisat, avec la résine alkyde, la dispersion aqueuse de polymérisat présentant une viscosité dynamique dans la plage de 1 à 80 mPa.s, mesurée selon DIN EN ISO 2555 à 25 °C (Brookfield).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10106561 A
- DE 4105134 A
- DE 2513516 A
- DE 2638544 A
- US 5750751 A
- EP 1044993 A
- WO 2006013061 A
- WO 9822545 A
- JP 59011376 B
- US 4010126 A
- EP 0267562 A
- DE 3432482 A
- EP 1578864 A
- DE 3339212
- US 5538760 A
- US 6369135 B
- DE 19957161 A
- DE 19957161
- US 5096959 A
- US 2634245 A
- US 2853459 A
- US 3133032 A
- US 3223659 A
- US 3379548 A
- US 3437615 A
- US 3437618 A
- US 103442835 A
- US 3457206 A
- US 3639315 A
- DE 1495032
- GE 1038696
- GE 1044821
- EP 0029145 A
- WO 2006092211 A
- EP 1533342 A
- EP 1129147 A


### In der Beschreibung aufgeführte Nicht-Patentliteratur


- **F.-B. Chen ; G. Bufkin.** Crosslinkable Emulsion Polymers by Autooxidation II. *Journal of Applied Polymer Science,* 1985, vol. 30, 4551-4570
- Ullmann's Encyclopedia of Industrial Chemistry 5
- **F.-B. Chen ; G. Bufkin.** Crosslinkable Emulsion Polymers by Autooxidation I. *Journal of Applied Polymer Science,* 1985, vol. 30, 4571-4582
- **F.-B. Chen ; G. Bufkin.** *Journal of Applied Polymer Science,* 1985, vol. 30, 4571-4582
- **Nach Fox T. G.** Bull. Am. Physics Soc. 1956, vol. 13, 123
- **Fachmann dem.** Polymer Handbook 2nd Edition. J. Wiley & Sons, 1975
- Ullmanns's Encyclopedia of Industrial Chemistry
- Acryl- und Methacrylverbindungen. **H. Rauch-Puntigam ; Th. Völker ; J. Wiley.** Encyclopedia of Chemical Technology. Springer, Heidelberg, 1978, vol. 1, 386ff